# EUROPEAN PATENT SPECIFICATION

(11) **EP 4 174 731 B1**
(45) Date of publication and mention of the grant of the patent: **30.09.2026**
(21) Application number: 21841761.6
(22) Date of filing: 12.07.2021
(51) Int. Cl.: G06N 10/40, G06N 10/20

(54) **SUPERCONDUCTING QUANTUM COMPUTING SYSTEM AND QUANTUM BIT MANIPULATION METHOD**
SUPRALEITENDES QUANTENRECHENSYSTEM UND QUANTENBITMANIPULATIONSVERFAHREN
SYSTÈME DE CALCUL QUANTIQUE SUPRACONDUCTEUR ET PROCÉDÉ DE MANIPULATION DE BIT QUANTIQUE

(30) Priority: 15.07.2020 CN 202010682678
(43) Date of publication of application: 03.05.2023
(73) Proprietor: Huawei Technologies Co., Ltd., Longgang District, Shenzhen, Guangdong 518129 (CN)
(72) Inventor: PAN, Jian, Shenzhen, Guangdong 518129 (CN); ZHAO, Peng, Shenzhen, Guangdong 518129 (CN)
(74) Representative: Gill Jennings & Every LLP
(86) International application number: PCT/CN2021/105815
(87) International publication number: WO 2022/012472

(56) References cited:
- WO-A1-2018/063206
- CN-A- 108 038 549
- CN-A- 108 805 293
- CN-A- 109 376 870
- CN-A- 109 376 870
- CN-A- 109 685 216
- CN-A- 111 144 573
- CHOU KEVIN S. ET AL: "Deterministic teleportation of a quantum gate between two logical qubits", vol. 561, no. 7723, 17 January 2018 (2018-01-17), pages 368 - 373, XP055847368, Retrieved from the Internet <URL:https://arxiv.org/pdf/1801.05283.pdf> DOI: 10.1038/s41586-018-0470-y
- FERDINAND HELMER ET AL: "Cavity grid for scalable quantum computation with superconducting circuits", CORR (ARXIV), 24 March 2009 (2009-03-24), pages 1 - 6, XP055463892

## Description

### TECHNICAL FIELD

This application relates to the computer field, and more specifically, to a superconducting quantum computing system and a quantum bit manipulation method.

### BACKGROUND

Quantum computing can not only be used to study a basic problem of quantum mechanics, but also have a potential powerful ability to resolve a specific problem, which has become a hot research topic in recent years. In various quantum computing schemes, superconducting quantum computing has become one of the most promising ways to implement quantum computing because of its advantages such as easy to control and expand. Superconducting quantum computing is a quantum computing scheme based on a superconducting circuit, and a core component of the superconducting circuit is a superconducting Josephson junction. The superconducting quantum circuit is highly compatible with an existing integrated circuit technology in terms of design, preparation, measurement, and the like, and can implement flexibly design and control on an energy level and coupling of a quantum bit, thereby having a great potential for large-scale deployment. Due to the rapid development in recent years, superconducting quantum computing has become one of the most promising candidates to implement general quantum computing.

A quantum bit (Qubit) on a superconducting chip is a carrier of a quantum state and carries quantum information. The Qubit may present a quantum feature in a low-temperature environment (10 mk), a ground state and a first excited state of energy levels of the Qubit may be encoded into a |0>state and a |1>state, and encoded into one Qubit, where the |0>state and the |1>state correspond to a state 0 and a state 1 of a bit in a classical computer. A calculation operation on the Qubit is classified into a single-Qubit operation and a two-Qubit operation. In a superconducting quantum computing system, the single-bit operation and the two-bit operation may be implemented by using an input microwave pulse signal. However, as a quantity of Qubits in the system increases, a surrounding Qubit may interfere with two to-be-manipulated target Qubits.

Currently, a computer may be used to optimize a pulse waveform. For example, a numerical optimization pulse technology is used to globally consider an entire complex multi-Qubit interaction, to design a pulse waveform with high fidelity and high robustness. However, as the quantity of Qubits in the system increases, dimensions of a matrix operation processed by using the numerical optimization pulse technology in the calculation process exponentially increase. For example, an existing commercial computer can only calculate pulse optimization of a computing system about 13 Qubits. Therefore, how to perform an operation on a Qubit in a large-scale superconducting quantum computing system is an urgent problem to be resolved.

CHOU KEVIN S. ET AL, "Deterministic teleportation of a quantum gate between two logical qubits", NATURE, vol. 561, no. 7723, doi:10.1038/s41586-018-0470-y, (20180117), pages 368 - 373, URL: https://arxiv.org/pdf/1801.05283.pdf, XP055847368 experimentally demonstrates the teleportation of a controlled-NOT (CNOT) gate, which is made deterministic by using real-time adaptive control. In addition, a step towards implementing robust, error-correctable modules is taken by enacting the gate between two logical qubits, encoding quantum information redundantly in the states of superconducting cavities. By using such an error-correctable encoding, the teleported gate achieves a process fidelity of 79 per cent. Teleported gates have implications for fault-tolerant quantum computation, and when realized within a network can have broad applications in quantum communication, metrology and simulations. The results provided in this paper illustrate an approach for implementing multi-qubit operations on logical qubits and, if integrated with quantum error-correction protocols, indicate a path towards fault-tolerant quantum computation using a modular architecture.

CN 109 376 870 A discloses a superconducting quantum bit chip, comprising a quasi-one-dimensional network chain structure layout superconducting quantum bit array and a manipulating and reading microwave circuit, wherein each mesh unit comprises n qubits, and m (m and n are natural numbers, n>m>=2) shared qubits between adjacent networks are used for interconnection between mesh units. Each superconducting qubit in the mesh unit is coupled to the same coplanar superconducting microwave cavity for interconnection of qubits in the network. Each qubit is coupled to a coplanar superconducting microwave cavity and further coupled to a coplanar microwave transmission line, and is connected to an external circuit for qubit state reading.

### SUMMARY

This application provides a superconducting quantum computing system and a quantum bit manipulation method, so that various quantum manipulations required for general quantum computing can be implemented on a large-scale superconducting quantum computing chip. The invention is defined in the independent claims. Preferred embodiments are defined by the dependent claims. Further aspects and examples are provided for facilitating the understanding of the invention.

According to a first aspect, a superconducting quantum computing system is provided. The system includes a control circuit and a superconducting quantum chip, and the superconducting quantum chip includes at least two connection regions and a first central exchange region.

Each connection region of the at least two connection regions includes a first suspended superconducting qubit and at least one first superconducting qubit, and the first suspended superconducting qubit is coupled to the at least one first superconducting qubit.

The first central exchange region includes the first suspended superconducting qubit in each connection region, and is used to transfer a quantum operation between superconducting qubits in different connection regions.

The control circuit is configured to control a coupling strength between the first suspended superconducting qubit in each connection region and the at least one first superconducting qubit.

Therefore, in the superconducting quantum computing system, a single connection region or a central exchange region can be isolated on the superconducting quantum chip by controlling the coupling strength between the first suspended superconducting qubit and the first superconducting qubit, thereby effectively obtaining a divided subspace. Inside the divided subspace, any single-bit or multi-bit logic gate manipulation may be implemented, and a two-bit gate manipulation between different connection regions may be transited by using the central exchange region. Therefore, in this embodiment of this application, various quantum manipulations required for general quantum computing can be implemented on a large-scale superconducting quantum computing chip.

For example, an overall function inside the divided subspace may be considered by using a numerical optimization pulse technology, to implement any single-bit or multi-bit logic gate manipulation with high fidelity inside the connection region or the central exchange region, and implement transition, by using the central exchange region, of the two-bit quantum manipulation between the different connection regions by using several numerical optimization pulses. This is not limited in this embodiment of this application.

There may be one, two, or more first suspended superconducting bits in the connection region. This is not limited.

In some optional embodiments, the first suspended superconducting qubit in the connection region may be coupled to at least one first superconducting qubit in the connection region, for example, coupled to one first superconducting qubit, two or more first superconducting qubits, or all first superconducting qubits in the connection region. This is not limited in this embodiment of this application.

In some optional embodiments, when there are at least two first superconducting qubits in the connection region, the at least two first superconducting qubits may be strongly coupled to each other. For example, each first superconducting qubit in the connection region may be coupled to one or more other first superconducting qubits in the connection region, or all other first superconducting qubits in the connection region. This is not limited in this embodiment of this application.

In addition, in this embodiment of this application, there may be high connectivity between first superconducting qubits in the connection region, and each qubit may interact with a plurality of qubits. In this way, inside the connection region, a complex line may be implemented by using a numerical optimization pulse waveform, thereby helping save line time and avoiding excessive decoherence. In addition, the numerical optimization pulse waveform can be used to help increase robustness to factors such as environmental noise and microwave crosstalk, thereby improving fidelity of the quantum manipulation.

In this embodiment of this application, superconducting qubits (for example, between the first superconducting qubit and the first suspended superconducting qubit, between the first superconducting qubits, or between a suspended superconducting qubit and a central superconducting qubit) may be coupled to each other by using a capacitor, a cavity, a coupler, or the like. This is not limited in this application.

In this embodiment of this application, the control circuit may control a coupling strength between the suspended superconducting qubit and another superconducting qubit, that is, a value of the coupling strength between the suspended superconducting qubit and the another superconducting qubit is adjustable, or coupling between the suspended superconducting qubit and the another superconducting qubit is adjustable.

For example, when the control circuit may be configured to control the coupling strength between the suspended superconducting qubit and the another superconducting qubit to be less than a first preset value, coupling between the suspended superconducting qubit and the another superconducting qubit can be disconnected, that is, the coupling strength between the suspended superconducting qubit and the another superconducting qubit is approximately 0. Alternatively, the control circuit may be configured to control the coupling strength between the suspended superconducting qubit and the another superconducting qubit to be greater than a second preset value, so that the suspended superconducting qubit and the another superconducting qubit interact with each other.

With reference to the first aspect, in some implementations of the first aspect, the first central exchange region further includes one first central superconducting qubit, and the first central superconducting qubit is coupled to the first suspended superconducting qubit in each connection region. In other words, in this implementation, the first central exchange region includes the first central superconducting qubit and first suspended superconducting qubits respectively corresponding to the at least two connection regions.

The control circuit is further configured to control a coupling strength between the first central superconducting qubit and the first suspended superconducting qubit.

Therefore, in this embodiment of this application, a single connection region or a central exchange region can be isolated on the superconducting quantum chip by controlling the coupling strength between the first suspended superconducting qubit and the first superconducting qubit or controlling the coupling strength between the first suspended superconducting qubit and the first central superconducting qubit. Therefore, in this embodiment of this application, only a few adjustable coupling manners are required for the superconducting quantum chip, to effectively obtain a divided subspace, thereby helping simplify a chip process requirement.

With reference to the first aspect, in some implementations of the first aspect, the at least two connection regions include a first connection region.

The control circuit is further configured to: control a coupling strength between a first suspended superconducting qubit in the first connection region and the first central superconducting qubit to be less than a first preset value, and send a first pulse waveform, where the first pulse waveform is used to perform a quantum operation on a superconducting qubit in the first connection region.

Therefore, in this embodiment of this application, the coupling strength between the first suspended superconducting qubit in the connection region and the central superconducting qubit in the central exchange region is controlled to be less than the first preset value, so that the connection region can be isolated on the superconducting quantum chip. Inside the connection region, any single-qubit or multi-qubit logic gate operation may be implemented by using the numerical optimization pulse technology. Therefore, in this embodiment of this application, various quantum operations required for general quantum computing can be implemented on a large-scale superconducting quantum chip.

With reference to the first aspect, in some implementations of the first aspect, the control circuit is further configured to: control a coupling strength between the first suspended superconducting qubit in each connection region and a first superconducting qubit coupled to the first suspended superconducting qubit to be less than the first preset value, and send a second pulse waveform, where the second pulse waveform is used to perform a quantum operation on a superconducting qubit in the first central exchange region.

Therefore, in this embodiment of this application, the coupling strength between each first suspended superconducting qubit in the central exchange region and the first superconducting qubit coupled to the first suspended superconducting qubit is controlled to be less than the first preset value, so that the central exchange region can be isolated on the superconducting quantum chip. Inside the central exchange region, any single-qubit or multi-qubit logic gate operation may be implemented by using the numerical optimization technology. Therefore, in this embodiment of this application, various quantum operations required for general quantum computing can be implemented on a large-scale superconducting quantum chip.

It should be noted that, in this embodiment of this application, the coupling strength between the first suspended superconducting qubit and the first superconducting qubit coupled to the first suspended superconducting qubit is less than the first preset value, that is, a coupling strength between the first suspended superconducting qubit and a first superconducting qubit coupled (that is, adjustably coupled) to the first suspended superconducting qubit is less than the first preset value. For example, in the first connection region, the first suspended superconducting qubit is adjustably coupled to one first superconducting qubit, and that "the coupling strength between the first suspended superconducting qubit and the first superconducting qubit coupled to the first suspended superconducting qubit is less than the first preset value" means that a coupling strength between the first suspended superconducting qubit and the first superconducting qubit is less than the first preset value. For example, in the first connection region, the first suspended superconducting qubit is adjustably coupled to two or more first superconducting qubits, and that "the coupling strength between the first suspended superconducting qubit and the first superconducting qubit coupled to the first suspended superconducting qubit is less than the first preset value" means that coupling strengths between the first suspended superconducting qubit and all first superconducting qubits in the two or more first superconducting qubits each are less than the first preset value.

With reference to the first aspect, in some implementations of the first aspect, the at least two connection regions include a second connection region and a third connection region.

The control circuit is further configured to: control a coupling strength between a first suspended superconducting qubit in the second connection region and the first central superconducting qubit to be less than a first preset value, control a coupling strength between the first suspended superconducting qubit in the second connection region and a first superconducting qubit coupled to the first suspended superconducting qubit to be greater than a second preset value, and send a third pulse waveform, where the third pulse waveform is used to perform a two-qubit operation on one first superconducting qubit in the second connection region and the first suspended superconducting qubit in the second connection region;
control the coupling strength between the first suspended superconducting qubit in the second connection region and the first central superconducting qubit to be greater than the second preset value, a coupling strength between a first suspended superconducting qubit in the third connection region and the first central superconducting qubit to be greater than the second preset value, and a coupling strength between the first suspended superconducting qubit in each connection region and a first superconducting qubit coupled to the first suspended superconducting qubit to be less than the first preset value, and send a fourth pulse waveform, where the fourth pulse waveform is used to perform a two-qubit operation on the first suspended superconducting qubit in the second connection region and the first suspended superconducting qubit in the third connection region in the first central exchange region; and
control a coupling strength between the first suspended superconducting qubit in the third connection region and a first superconducting qubit coupled to the first suspended superconducting qubit to be greater than the second preset value and the coupling strength between the first suspended superconducting qubit in the third connection region and the first central superconducting qubit to be less than the first preset value, and send a fifth pulse waveform, where the fifth pulse waveform is used to perform a two-qubit operation on one first superconducting qubit in the third connection region and the first suspended superconducting qubit in the third connection region.

Therefore, in this embodiment of this application, transition is performed on a two-qubit gate operation between superconducting qubits in two different connection regions by using the central exchange region, so that a two-qubit gate operation between superconducting qubits in any two connection regions associated with the central exchange region can be implemented, thereby helping implement various quantum operations required for general quantum computing on a large-scale superconducting quantum chip.

It should be noted that, in this embodiment of this application, the coupling strength between the first suspended superconducting qubit and the first superconducting qubit coupled to the first suspended superconducting qubit is greater than the second preset value, that is, a coupling strength between the first suspended superconducting qubit and a first superconducting qubit coupled (that is, adjustably coupled) to the first suspended superconducting qubit is greater than the second preset value. For example, in the first connection region, the first suspended superconducting qubit is adjustably coupled to one first superconducting qubit, and that "the coupling strength between the first suspended superconducting qubit and the first superconducting qubit coupled to the first suspended superconducting qubit is greater than the second preset value" means that a coupling strength between the first suspended superconducting qubit and the first superconducting qubit is greater than the second preset value. For example, in the first connection region, the first suspended superconducting qubit is adjustably coupled to two or more first superconducting qubits, and that "the coupling strength between the first suspended superconducting qubit and the first superconducting qubit coupled to the first suspended superconducting qubit is greater than the second preset value" means that coupling strengths between the first suspended superconducting qubit and all first superconducting qubits in the two or more first superconducting qubits each are greater than the second preset value.

It should be further noted that, when the connection region includes at least two first superconducting qubits, the at least two first superconducting qubits are strongly coupled to each other, and the first suspended superconducting qubit may be adjustably coupled to some of the at least two first superconducting qubits, it may be considered that the first suspended superconducting qubit is directly coupled or indirectly coupled to each first superconducting qubit in the connection region. For example, when the first suspended superconducting qubit is adjustably coupled to one first superconducting qubit in the connection region, and the first superconducting qubit is strongly coupled to another first superconducting qubit in the connection region, it may be considered that the first suspended superconducting qubit is indirectly coupled to the another first superconducting qubit. Based on this, in this embodiment of this application, the control circuit can perform a two-qubit operation on any first superconducting qubit in the connection region and the first suspended superconducting qubit in the connection region by using a pulse waveform.

With reference to the first aspect, in some implementations of the first aspect, the control circuit is further configured to: control the coupling strength between the first suspended superconducting qubit in the third connection region and the first central superconducting qubit to be greater than the second preset value, control the coupling strength between the first suspended superconducting qubit in each connection region and the first superconducting qubit coupled to the first suspended superconducting qubit to be less than the first preset value, and send a sixth pulse waveform, where the sixth pulse waveform is used to perform a reset operation on the first suspended superconducting qubit in the third connection region in the first central exchange region; and
control the coupling strength between the first suspended superconducting qubit in the second connection region and the first superconducting qubit coupled to the first suspended superconducting qubit in the second connection region to be greater than the second preset value, control the coupling strength between the first suspended superconducting qubit in the second connection region and the first central superconducting qubit to be less than the first preset value, and send a seventh pulse waveform, where the seventh pulse waveform is used to perform a reset operation on the first suspended superconducting qubit in the second connection region.

Therefore, in this embodiment of this application, a single connection region or a central exchange region is isolated, to implement a reset operation on a first suspended superconducting qubit used for transiting a quantum operation between superconducting qubits in different connection regions, so that a quantum state of the first suspended superconducting qubit can be restored, thereby avoiding impact on another superconducting qubit when the quantum operation between the superconducting qubits in the different connection regions is performed.

It should be noted that, in the first central exchange region, the first central superconducting qubit is coupled to the first suspended superconducting qubit in each connection region. In this case, it may be considered that each first suspended superconducting qubit in the first central exchange region is indirectly coupled to each other. Based on this, in this embodiment of this application, the control circuit can perform a two-qubit operation, for example, a reset operation, on any two first suspended superconducting qubits in the first exchange region by using a pulse waveform.

With reference to the first aspect, in some implementations of the first aspect, the first suspended superconducting qubit in each connection region is a same superconducting qubit, that is, the first suspended superconducting qubit is coupled to at least one first superconducting qubit in each connection region. In other words, in this implementation, the first central exchange region includes only one suspended superconducting qubit, and the suspended superconducting qubit is also a first suspended superconducting qubit corresponding to each connection region. In other words, a first suspended superconducting qubit included in at least one connection region associated with the first central exchange region is a same first suspended superconducting qubit. The first suspended superconducting qubit may also be referred to as a central superconducting qubit.

Therefore, in this embodiment of this application, a single connection region or a central exchange region can be isolated on the superconducting quantum chip by controlling the coupling strength between the first suspended superconducting qubit and the first superconducting qubit. Therefore, in this embodiment of this application, only a few adjustable coupling manners are required for the superconducting quantum chip, to effectively obtain a divided subspace, thereby helping simplify a chip process requirement.

With reference to the first aspect, in some implementations of the first aspect, the at least two connection regions include a fourth connection region.

The control circuit is further configured to: control a coupling strength between the first suspended superconducting qubit and a first superconducting qubit coupled to the first superconducting qubit in a connection region other than the fourth connection region in the at least two connection regions to be less than a first preset value, and send an eighth pulse waveform, where the eighth pulse waveform is used to perform a quantum operation on a superconducting qubit in the fourth connection region.

Therefore, in this embodiment of this application, the coupling strength between the first suspended superconducting qubit and the first superconducting qubit in the connection region other than the fourth connection region is controlled to be less than the first preset value, so that the fourth connection region can be isolated on the superconducting quantum chip. Inside the fourth connection region, any single-qubit or multi-qubit logic gate operation may be implemented by using the numerical optimization technology. Therefore, in this embodiment of this application, various quantum operations required for general quantum computing can be implemented on a large-scale superconducting quantum chip.

With reference to the first aspect, in some implementations of the first aspect, the control circuit is further configured to: control a coupling strength between the first suspended superconducting qubit and a first superconducting qubit coupled to the first suspended superconducting qubit to be less than a first preset value, and send a ninth pulse waveform, where the ninth pulse waveform is used to perform a single-qubit quantum operation on the first suspended superconducting qubit.

Therefore, in this embodiment of this application, the coupling strength between the first suspended superconducting qubit in the central exchange region and the first superconducting qubit, in each connection region, coupled to the first suspended superconducting qubit is controlled to be less than the first preset value, so that the central exchange region can be isolated on the superconducting quantum chip. Inside the central exchange region, any single-qubit logic gate operation may be implemented by using the numerical optimization technology. Therefore, in this embodiment of this application, various quantum operations required for general quantum computing can be implemented on a large-scale superconducting quantum chip.

With reference to the first aspect, in some implementations of the first aspect, the at least two connection regions include a fifth connection region and a sixth connection region.

The control circuit is further configured to: control a coupling strength between the first suspended superconducting qubit and a first superconducting qubit coupled to the first superconducting qubit in a connection region other than the fifth connection region in the at least two connection regions to be less than a first preset value and a coupling strength between the first suspended superconducting qubit and a first superconducting qubit coupled to the first suspended superconducting qubit in the fifth connection region to be greater than a second preset value, and send a tenth pulse waveform, where the tenth pulse waveform is used to perform a two-qubit operation on one first superconducting qubit in the fifth connection region and the first suspended superconducting qubit; and
control a coupling strength between the first suspended superconducting qubit and a first superconducting qubit coupled to the first superconducting qubit in a connection region other than the sixth connection region in the at least two connection regions to be less than a first preset value and a coupling strength between the first suspended superconducting qubit and a first superconducting qubit coupled to the first suspended superconducting qubit in the sixth connection region to be greater than a second preset value, and send an eleventh pulse waveform, where the eleventh pulse waveform is used to perform a two-qubit operation on one first superconducting qubit in the sixth connection region and the first suspended superconducting qubit.

Therefore, in this embodiment of this application, transition is performed on a two-qubit gate operation between superconducting qubits in two different connection regions by using the central exchange region, so that a two-qubit gate operation between superconducting qubits in any two connection regions associated with the central exchange region can be implemented, thereby helping implement various quantum operations required for general quantum computing on a large-scale superconducting quantum chip.

With reference to the first aspect, in some implementations of the first aspect, the control circuit is further configured to control the coupling strength between the first suspended superconducting qubit and the first superconducting qubit coupled to the first superconducting qubit in the connection region other than the fifth connection region in the at least two connection regions to be less than the first preset value and the coupling strength between the first suspended superconducting qubit and the first superconducting qubit coupled to the first suspended superconducting qubit in the fifth connection region to be greater than the second preset value, and send a twelfth pulse waveform, where the twelfth pulse waveform is used to perform a reset operation on the first suspended superconducting qubit.

Therefore, in this embodiment of this application, a single connection region or a central exchange region is isolated, to implement a reset operation on a first suspended superconducting qubit used for transiting a quantum operation between superconducting qubits in different connection regions, so that a quantum state of the first suspended superconducting qubit can be restored, thereby avoiding impact on another superconducting qubit when the quantum operation between the superconducting qubits in the different connection regions is performed.

With reference to the first aspect, in some implementations of the first aspect, the first suspended superconducting qubit is coupled to one (or a few) first superconducting qubit in a connection region in which the first suspended superconducting qubit is located. In this way, the central exchange region can be isolated by disconnecting the coupling between the first suspended superconducting qubit and the one first superconducting qubit or by disconnecting the coupling between the first suspended superconducting qubit and the few first superconducting qubits, thereby more conveniently and effectively obtaining a divided subspace.

With reference to the first aspect, in some implementations of the first aspect, there are at least two first central exchange regions.

The superconducting quantum chip further includes a second central exchange region, the second central exchange region includes at least two second suspended superconducting qubits and one second central superconducting qubit, the at least two second suspended superconducting qubits are in a one-to-one correspondence with the at least two first central exchange regions, the second central superconducting qubit is coupled to each second suspended superconducting qubit, and each second suspended superconducting qubit is coupled to at least one superconducting qubit in a first central exchange region corresponding to each second suspended superconducting qubit.

The control circuit is further configured to control a coupling strength between the second central superconducting qubit and each second suspended superconducting qubit and a coupling strength between each second suspended superconducting qubit and the superconducting qubit in the first central exchange region corresponding to the second suspended superconducting qubit.

Therefore, in this embodiment of this application, a superconducting quantum chip with a two-dimensional structure may be used as a basis. One second suspended superconducting qubit may be led out from each of at least two first central superconducting qubits in the two-dimensional structure (that is, each first central superconducting qubit is coupled to the one second suspended superconducting qubit), and the at least two second suspended superconducting qubits each are coupled to the second central superconducting qubit, to form a superconducting quantum chip with a three-dimensional structure, that is, the superconducting quantum chip with the three-dimensional structure may couple (or connect) a plurality of two-dimensional structures together.

Further, on the superconducting quantum chip with the three-dimensional structure, the quantum manipulation may be performed on superconducting qubits on the superconducting quantum chip for a same two-dimensional structure or for different two-dimensional structures, thereby helping implement various quantum operations required for general quantum computing on a large-scale superconducting quantum chip.

With reference to the first aspect, in some implementations of the first aspect, there are at least two first central exchange regions.

The superconducting quantum chip further includes a third central exchange region, where the third central exchange region includes one third central superconducting qubit, and the third central superconducting qubit is coupled to at least one superconducting qubit in each first central exchange region.

The control circuit is further configured to control a coupling strength between the third central superconducting qubit and the superconducting qubit in each first central exchange region.

Therefore, in this embodiment of this application, a superconducting quantum chip with a two-dimensional structure may be used as a basis. One third central superconducting qubit may be led out from each of at least two first central superconducting qubits in the two-dimensional structure, to form a superconducting quantum chip with a three-dimensional structure, that is, the superconducting quantum chip with the three-dimensional structure may couple (or connect) a plurality of two-dimensional structures together.

Further, on the superconducting quantum chip with the three-dimensional structure, the quantum manipulation may be performed on superconducting qubits on the superconducting quantum chip for a same two-dimensional structure or for different two-dimensional structures, thereby helping implement various quantum operations required for general quantum computing on a large-scale superconducting quantum chip.

With reference to the first aspect, in some implementations of the first aspect, a total quantity of superconducting qubits included in each connection region is less than or equal to N, and a total quantity of superconducting qubits included in the first central exchange region is less than or equal to N, where N represents a maximum dimension, of a quantum system, solved by a valid numerical value, and N is a positive integer.

Therefore, in this application, the quantity of superconducting qubits included in each connection region is enabled to be less than or equal to the maximum dimension, of the quantum system, solved by the valid numerical value, so that a pulse waveform can be solved for a quantum operation in the connection region by using a numerical optimization method, thereby helping implement various quantum manipulations required for implementing general quantum computing on the large-scale superconducting quantum computing chip.

In a possible case, when the first central exchange region includes a first central superconducting qubit and first suspended superconducting qubits corresponding to at least two connection regions, a quantity of first suspended superconducting qubits included in the first central exchange region, that is, a quantity of connection regions associated with the first central exchange region, is less than or equal to (N-1). Therefore, in this application, the pulse waveform can be solved for the quantum operation in the first central exchange region by using the numerical optimization method, thereby helping implement various quantum manipulations required for general quantum computing on the large-scale superconducting quantum computing chip.

In another possible case, when the first central exchange region includes only one central superconducting qubit, the quantity of connection regions associated with the first central exchange region does not affect a quantity of superconducting qubits included in the first central exchange region. Therefore, in this case, the quantity of connection regions associated with the first central exchange region is not limited. In addition, if a space limitation of the quantum superconducting chip is not considered, in this case, any plurality of connection regions may be suspended in the first central exchange region, so that any plurality of superconducting qubits can be accommodated.

With reference to the first aspect, in some implementations of the first aspect, the superconducting quantum computing system may include a control system, and the control system includes the foregoing control circuit. For example, the control system may further include devices such as a microwave source, an arbitrary wave generator, and an integrated measurement and control board. This is not limited in this embodiment of this application.

With reference to the first aspect, in some implementations of the first aspect, the superconducting quantum computing system may further include a measurement system, and the measurement system is configured to read a final state of the superconducting qubit in the superconducting quantum chip, and obtain a measurement result based on the final state.

According to a second aspect, a quantum bit manipulation method is provided, applied to a superconducting quantum computing system, where the superconducting quantum computing system includes a control circuit and a superconducting quantum chip.

The superconducting quantum chip includes at least two connection regions and a first central exchange region, each connection region of the at least two connection regions includes a first suspended superconducting qubit and at least one first superconducting qubit, and the first suspended superconducting qubit is coupled to the at least one first superconducting qubit.

The first central exchange region includes the first suspended superconducting qubit in each connection region, and is used to transfer a quantum operation between superconducting qubits in different connection regions.

The method includes:
The control circuit controls a coupling strength between the first suspended superconducting qubit in each connection region and the at least one first superconducting qubit, to obtain a first subspace, where the first subspace is the connection region or the first central exchange region; and
the control circuit sends a pulse waveform to the superconducting quantum chip, where the pulse waveform is used to perform a quantum operation on a superconducting qubit in the first subspace.

With reference to the second aspect, in some implementations of the second aspect, the first central exchange region further includes one first central superconducting qubit, and the first central superconducting qubit is coupled to the first suspended superconducting qubit in each connection region.

With reference to the second aspect, in some implementations of the second aspect, that the control circuit controls a coupling strength between the first suspended superconducting qubit in each connection region and the at least one first superconducting qubit, to obtain a first subspace includes:
The control circuit controls a coupling strength between a first suspended superconducting qubit in a first connection region and the first central superconducting qubit to be less than a first preset value, to obtain the first subspace, where the first subspace is the first connection region.

That the control circuit sends a pulse waveform to the superconducting quantum chip, where the pulse waveform is used to perform a quantum operation on a superconducting qubit in the first subspace includes:
The control circuit sends a first pulse waveform to the superconducting quantum chip, where the first pulse waveform is used to perform a quantum operation on a superconducting qubit in the first connection region.

With reference to the second aspect, in some implementations of the second aspect, that the control circuit controls a coupling strength between the first suspended superconducting qubit in each connection region and the at least one first superconducting qubit, to obtain a first subspace includes:
The control circuit controls a coupling strength between the first suspended superconducting qubit in each connection region and a first superconducting qubit coupled to the first suspended superconducting qubit to be less than the first preset value, to obtain the first subspace, where the first subspace is the first central exchange region.

That the control circuit sends a pulse waveform to the superconducting quantum chip, where the pulse waveform is used to perform a quantum operation on a superconducting qubit in the first subspace includes:
The control circuit sends a second pulse waveform to the superconducting quantum chip, where the second pulse waveform is used to perform a quantum operation on a superconducting qubit in the first central exchange region.

With reference to the second aspect, in some implementations of the second aspect, the at least two connection regions include a second connection region and a third connection region, and the method further includes:
The control circuit controls a coupling strength between a first suspended superconducting qubit in the second connection region and the first central superconducting qubit to be less than a first preset value, controls a coupling strength between the first suspended superconducting qubit in the second connection region and a first superconducting qubit coupled to the first suspended superconducting qubit to be greater than a second preset value, and sends a third pulse waveform to the superconducting quantum chip, where the third pulse waveform is used to perform a two-qubit operation on one first superconducting qubit in the second connection region and the first suspended superconducting qubit in the second connection region;
controls the coupling strength between the first suspended superconducting qubit in the second connection region and the first central superconducting qubit to be greater than the second preset value, a coupling strength between a first suspended superconducting qubit in the third connection region and the first central superconducting qubit to be greater than the second preset value, and a coupling strength between the first suspended superconducting qubit in each connection region and a first superconducting qubit coupled to the first suspended superconducting qubit to be less than the first preset value, and sends a fourth pulse waveform to the superconducting quantum chip, where the fourth pulse waveform is used to perform a two-qubit operation on the first suspended superconducting qubit in the second connection region and the first suspended superconducting qubit in the third connection region in the first central exchange region; and
controls a coupling strength between the first suspended superconducting qubit in the third connection region and a first superconducting qubit coupled to the first suspended superconducting qubit to be greater than the second preset value and the coupling strength between the first suspended superconducting qubit in the third connection region and the first central superconducting qubit to be less than the first preset value, and sending a fifth pulse waveform, where the fifth pulse waveform is used to perform a two-qubit operation on one first superconducting qubit in the third connection region and the first suspended superconducting qubit in the third connection region.

With reference to the second aspect, in some implementations of the second aspect, the control circuit controls the coupling strength between the first suspended superconducting qubit in the third connection region and the first central superconducting qubit to be greater than the second preset value, controls the coupling strength between the first suspended superconducting qubit in each connection region and the first superconducting qubit coupled to the first suspended superconducting qubit to be less than the first preset value, and sends a sixth pulse waveform to the superconducting quantum chip, where the sixth pulse waveform is used to perform a reset operation on the first suspended superconducting qubit in the third connection region in the first central exchange region; and
controls the coupling strength between the first suspended superconducting qubit in the second connection region and the first superconducting qubit coupled to the first suspended superconducting qubit in the second connection region to be greater than the second preset value, controls the coupling strength between the first suspended superconducting qubit in the second connection region and the first central superconducting qubit to be less than the first preset value, and sends a seventh pulse waveform to the superconducting quantum chip, where the seventh pulse waveform is used to perform a reset operation on the first suspended superconducting qubit in the second connection region.

With reference to the second aspect, in some implementations of the second aspect, the first suspended superconducting qubit in each connection region is a same superconducting qubit.

With reference to the second aspect, in some implementations of the second aspect, the at least two connection regions include a fourth connection region, and that the control circuit controls a coupling strength between the first suspended superconducting qubit in each connection region and the at least one first superconducting qubit, to obtain a first subspace includes:
The control circuit controls a coupling strength between the first suspended superconducting qubit and a first superconducting qubit coupled to the first superconducting qubit in a connection region other than the fourth connection region in the at least two connection regions to be less than a first preset value, to the first subspace, where the first subspace is the fourth connection region.

That the control circuit sends a pulse waveform to the superconducting quantum chip, where the pulse waveform is used to perform a quantum operation on a superconducting qubit in the first subspace includes:
The control circuit sends an eighth pulse waveform to the superconducting quantum chip, where the eighth pulse waveform is used to perform a quantum operation on a superconducting qubit in the fourth connection region.

With reference to the second aspect, in some implementations of the second aspect, that the control circuit controls a coupling strength between the first suspended superconducting qubit in each connection region and the at least one first superconducting qubit, to obtain a first subspace includes:
The control circuit controls a coupling strength between the first suspended superconducting qubit and a first superconducting qubit coupled to the first suspended superconducting qubit to be less than a first preset value, to obtain the first subspace, where the first subspace is the first central exchange region.

That the control circuit sends a pulse waveform to the superconducting quantum chip, where the pulse waveform is used to perform a quantum operation on a superconducting qubit in the first subspace includes:
The control circuit sends a ninth pulse waveform to the superconducting quantum chip, where the ninth pulse waveform is used to perform a single-qubit quantum operation on the first suspended superconducting qubit.

With reference to the second aspect, in some implementations of the second aspect, the at least two connection regions include a fifth connection region and a sixth connection region, and the method further includes:
The control circuit controls a coupling strength between the first suspended superconducting qubit and a first superconducting qubit coupled to the first superconducting qubit in a connection region other than the fifth connection region in the at least two connection regions to be less than a first preset value and a coupling strength between the first suspended superconducting qubit and a first superconducting qubit coupled to the first suspended superconducting qubit in the fifth connection region to be greater than a second preset value, and sends a tenth pulse waveform to the superconducting quantum chip, where the tenth pulse waveform is used to perform a two-qubit operation on one first superconducting qubit in the fifth connection region and the first suspended superconducting qubit; and
controls a coupling strength between the first suspended superconducting qubit and a first superconducting qubit coupled to the first superconducting qubit in a connection region other than the sixth connection region in the at least two connection regions to be less than a first preset value and a coupling strength between the first suspended superconducting qubit and a first superconducting qubit coupled to the first suspended superconducting qubit in the sixth connection region to be greater than a second preset value, and sends an eleventh pulse waveform to the superconducting quantum chip, where the eleventh pulse waveform is used to perform a two-qubit operation on one first superconducting qubit in the sixth connection region and the first suspended superconducting qubit.

With reference to the second aspect, in some implementations of the second aspect, the method further includes:
The control circuit controls the coupling strength between the first suspended superconducting qubit and the first superconducting qubit coupled to the first superconducting qubit in the connection region other than the fifth connection region in the at least two connection regions to be less than the first preset value and the coupling strength between the first suspended superconducting qubit and the first superconducting qubit coupled to the first suspended superconducting qubit in the fifth connection region to be greater than the second preset value, and sends a twelfth pulse waveform to the superconducting quantum chip, where the twelfth pulse waveform is used to perform a reset operation on the first suspended superconducting qubit.

With reference to the second aspect, in some implementations of the second aspect, the first suspended superconducting qubit is coupled to one first superconducting qubit in a connection region in which the first suspended superconducting qubit is located.

With reference to the second aspect, in some implementations of the second aspect, there are at least two first central exchange regions.

The superconducting quantum chip further includes a second central exchange region, the second central exchange region includes at least two second suspended superconducting qubits and one second central superconducting qubit, the at least two second suspended superconducting qubits are in a one-to-one correspondence with the at least two first central exchange regions, the second central superconducting qubit is coupled to each second suspended superconducting qubit, and each second suspended superconducting qubit is coupled to at least one superconducting qubit in a first central exchange region corresponding to each second suspended superconducting qubit.

The method further includes:
The control circuit controls a coupling strength between the second central superconducting qubit and each second suspended superconducting qubit and a coupling strength between each second suspended superconducting qubit and the superconducting qubit in the first central exchange region.

With reference to the second aspect, in some implementations of the second aspect, there are at least two first central exchange regions.

The superconducting quantum chip further includes a third central exchange region, where the third central exchange region includes one third central superconducting qubit, and the third central superconducting qubit is coupled to at least one superconducting qubit in each first central exchange region.

The method further includes:
The control circuit controls a coupling strength between the third central superconducting qubit and the superconducting qubit in each first central exchange region.

With reference to the second aspect, in some implementations of the second aspect, a total quantity of superconducting qubits included in each connection region is less than or equal to N, and a total quantity of superconducting qubits included in the first central exchange region is less than or equal to N, where N represents a maximum dimension, of a quantum system, solved by a valid numerical value, and N is a positive integer.

It should be understood that for beneficial effects achieved in the second aspect and the corresponding implementations of this application, refer to beneficial effects achieved in the first aspect and the corresponding implementations of this application. Details are not described again.

### BRIEF DESCRIPTION OF DRAWINGS

FIG. 1 is a schematic diagram of one Qubit and two Qubits;
FIG. 2 shows a specific example of two types of two-bit gate operations;
FIG. 3 shows an example of a planar mesh grid Qubit chip;
FIG. 4 shows an example of implementing a two-bit gate operation on two non-adjacent Qubits;
FIG. 5 is a schematic diagram of a gradient rise optimization method (GRAPE) principle;
FIG. 6 is a schematic block diagram of a superconducting quantum computing system according to an embodiment of this application;
FIG. 7 shows an example of a first central exchange region and at least two connection regions;
FIG. 8 shows a specific example of a quantum manipulation between different connection regions;
FIG. 9 shows a specific example of disassembling a two-bit CNOT gate between different connection regions;
FIG. 10 shows another example of a first central exchange region and at least two connection regions;
FIG. 11 shows a specific example of a quantum manipulation between different connection regions;
FIG. 12 shows a specific example of disassembling a two-bit CNOT gate between different connection regions;
FIG. 13 shows an example of a superconducting quantum chip with a three-dimensional structure;
FIG. 14A shows a quantum manipulation solution in a same two-dimensional structure;
FIG. 14B shows another quantum manipulation solution in a same two-dimensional structure;
FIG. 14C shows another quantum manipulation solution in a same two-dimensional structure;
FIG. 15 shows a specific example of a quantum manipulation between different two-dimensional structures;
FIG. 16 shows a specific example of disassembling a two-bit CNOT gate between different two-dimensional structures;
FIG. 17 shows another example of a superconducting quantum chip with a three-dimensional structure; and
FIG. 18 is a schematic flowchart of a quantum bit manipulation method according to an embodiment of this application.

### DESCRIPTION OF EMBODIMENTS

The following describes technical solutions of this application with reference to accompanying drawings.

First, related concepts and technologies in embodiments of this application are briefly described.
1. Qubit: may also be referred to as a superconducting quantum bit (superconducting Qubit) or a superconducting bit, and may be considered as an LC oscillation loop including a nonlinear inductor. A core component of the LC oscillation loop may be a nonlinear inductor formed by a Josephson junction. Qubits may be coupled (which may also be referred to as "connected") to each other by using a capacitor, a cavity, a coupler, or in another manner, so that adjacent Qubits interact with each other.

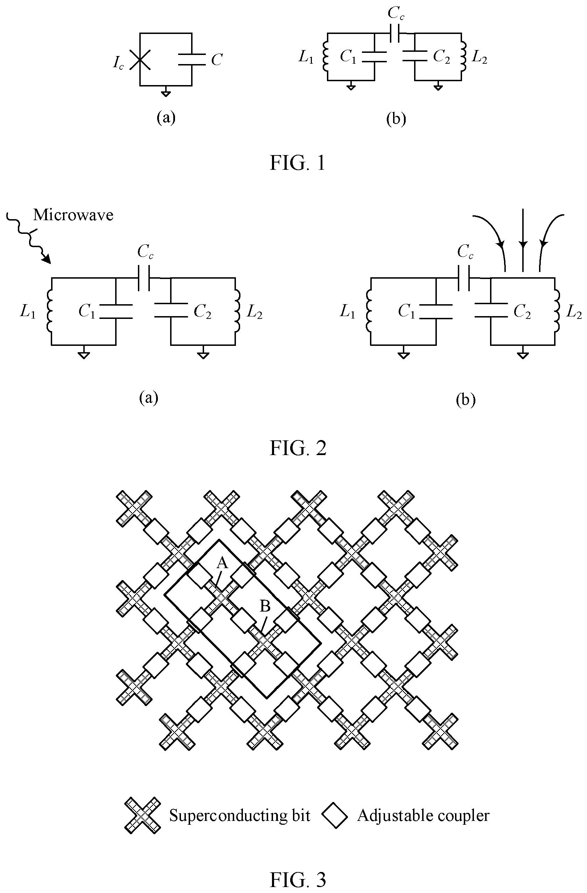

   (a) in FIG. 1 shows a schematic diagram of one Qubit, and (b) in FIG. 1 shows a schematic diagram of Qubits connected by using a capacitor. In (a) in FIG. 1, Ic represents an inductor in the Josephson junction, and C represents a capacitor in the Josephson junction. In (b) in FIG. 1, *L*₁ and *C*₁ respectively represent an inductor and a capacitor in a Josephson junction in one Qubit, and *L*₂ and *C*₂ respectively represent an inductor and a capacitor in a Josephson junction in the other Qubit. The two Qubits are coupled by using a capacitor Cc.
2. Suspended Qubit: may be coupled to another Qubit (for example, the suspended Qubit, or the Qubit) by using a capacitor, a cavity, a coupler, or in another manner, so that the suspended Qubit and the another Qubit interact with each other. Coupling between the suspended Qubit and the another Qubit is adjustable, that is, a value of a coupling strength between the suspended Qubit and the another Qubit is adjustable. For example, the value of the coupling strength between the suspended Qubit and the another Qubit may be adjusted by adjusting a parameter of the capacitor, the cavity, or the coupler that is used to couple the suspended Qubit and the another Qubit.

In some possible embodiments, when the coupling strength between the suspended Qubit and the another Qubit is less than a first preset value, it may be considered that a connection (or coupling) between the suspended Qubit and the another Qubit is disconnected (or cut off), that is, the suspended Qubit and the another Qubit does not interact with each other. In this case, it may also be considered that the coupling strength between the suspended Qubit and the another Qubit is approximately 0. For example, the first preset value may be at an order of magnitude of 1 kHz, or may be 1‰ of a coupling strength when the Qubits interact with each other.

In some possible embodiments, when the coupling strength between the suspended Qubit and the another Qubit is greater than a second preset value, it may be considered that there is an effective and considerable coupling strength between the suspended Qubit and the another Qubit, that is, the suspended Qubit and the another Qubit interact with each other. For example, the second preset value may be in an order of magnitude of 5 MHz.

In this embodiment of this application, the first preset value and the second preset value may be the same or different. This is not limited in this embodiment of this application. In some optional embodiments, the second preset value may be far greater than the first preset value.

When the first preset value is the same as the second preset value, when the coupling strength between the suspended Qubit and the another Qubit is less than the preset value, it may be considered that the suspended Qubit and the another Qubit are disconnected, that is, the suspended Qubit and the another Qubit does not interact with each other. When the coupling strength between the suspended Qubit and the another Qubit is greater than the preset value, it may be considered that the suspended Qubit and the another Qubit are connected, that is, the suspended Qubit and the another Qubit interact with each other.

3. Single-bit gate operation: may also be referred to as a single-bit operation, and refers to a logic gate operation performed on a quantum state of a single Qubit, for example, bit flipping or phase rotation. This is not limited.

In a superconducting quantum computing system, the single-bit gate operation can be implemented directly and simply by using an input microwave pulse signal.

4. Two-bit gate operation: may also be referred to as a two-bit operation, and refers to a two-bit logic gate operation performed on quantum states of two Qubits, for example, may be a quantum state exchange operation (SWAP), a controlled NOT gate operation (CONT), or a controlled phase gate operation (CZ). This is not limited.

In a superconducting quantum computing system, the two-bit gate operation may be implemented between two Qubits that are coupled (or interact with each other). For example, two superconducting bits may be directly connected by using a line (for example, a capacitor, a cavity, or a coupler), so that the two superconducting bits interact with each other.

FIG. 2 shows a specific example of two types of two-bit gate operations. For example, two to-be-manipulated target Qubits may be isolated, and then the two-bit gate operation is implemented by externally adding a microwave (as shown in (a) in FIG. 2), adjusting an externally-added magnetic field (as shown in (b) in FIG. 2), or the like. Resonance is generated between two adjacent Qubits by externally adding the microwave or adjusting the externally-added magnetic field, so that a two-bit gate manipulation solution can be implemented. In the two-bit gate operation, a waveform of a pulse is controlled to have a simple and extensible analytical form. For example, in a Google (Google) superconducting adiabatic CZ gate, a pulse waveform may be a Gaussian waveform.

Generally, a calculation operation on the Qubit includes a single-bit gate operation and a two-bit gate operation. A meaningful quantum algorithm generally includes a plurality of single-bit gate operations and any two-bit gate operation.

5. Multi-bit gate operation: is also referred to as a multi-bit operation, refers to a global operation performed on three or more bits, for example, a three-bit Toffoli gate operation. This is not limited.

In a Qubit chip design, each Qubit is directly coupled only to an adjacent Qubit, and Qubits in the chip are arranged into a line or a planar mesh grid. FIG. 3 shows an example of a planar mesh grid Qubit chip. Each Qubit interacts with another Qubit adjacent to the Qubit by using an adjustable coupler.

In this design, two adjacent Qubits may directly perform a two-bit gate operation. For example, when a two-bit gate operation needs to be performed on two adjacent Qubits (for example, a Qubit A and a Qubit B in FIG. 3), frequencies of adjacent bits around the two Qubits need to be adjusted to positions far away from frequencies of the Qubit A and the Qubit B, or a coupling strength between an adjacent bit and the Qubit A and a coupling strength between an adjacent bit and the Qubit B are adjusted to 0 (that is, 0 or approximately 0). In this way, the two Qubits that need to be operated are isolated, and are approximately considered as a two-body problem for processing.

In the foregoing design, when two target Qubits are manipulated, the two to-be-manipulated target Qubits need to be isolated, and only an interaction between two simplified adjacent Qubits is considered. In an actual operation, it is difficult to implement an ideal isolated environment. Even if a surrounding bit and a target Qubit are adjusted to be greatly detuned, or a coupling strength between the surrounding bit and the target Qubit is adjusted to a very small value, as a quantity of Qubits in the chip increases, residual interactions of the surrounding bit may accumulate, which affects fidelity of the actual operation.

In addition, in this design, a microwave crosstalk phenomenon exists on the Qubit chip, and when the target Qubit is manipulated, microwave crosstalk inevitably occurs on the surrounding bit. In this case, the target Qubit and many surrounding bits form a complex multi-body problem. Therefore, when the target Qubit is manipulated, it is difficult to have no additional impact on the surrounding Qubit.

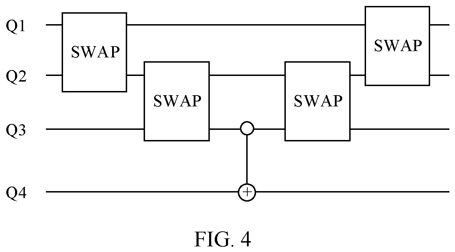

In addition, when a complex algorithm is implemented in the foregoing Qubit chip, if a two-bit gate operation needs to be performed on a Qubit and another Qubit that is far away from the Qubit, a quantum state exchange operation needs to be sequentially performed on the Qubit and adjacent Qubits, that is, the two-bit gate operation is not performed until the quantum state is exchanged to a bit adjacent to the target Qubit. After the calculation, the quantum state needs to be exchanged again to put the quantum state back to the original Qubit. FIG. 4 shows an example of implementing a two-bit gate operation on two non-adjacent Qubits. As shown in FIG. 4, when a two-bit controlled phase gate operation needs to be performed on non-adjacent Qubits Q1 and Q4, a SWAP operation needs to be performed on Q1 and a Qubit Q2 adjacent to Q1, to exchange a quantum state of Q1 to Q2. Then, the SWAP operation is performed on Q2 and a Qubit Q3 adjacent to Q2, to exchange a quantum state of Q2 to Q3. Then, the two-bit controlled phase gate operation is performed on Q3 and Q4. Then, the SWAP operation needs to be performed on Q3 and Q2, to exchange the quantum state of Q3 to Q2, and the SWAP operation needs to be performed on Q2 and Q1, to exchange the quantum state of Q2 to Q1.

Each gate operation consumes a specific amount of time, but a quantum chip system has only a finite length of coherence time. Therefore, a correct result can be obtained only when an algorithm or a series of operation steps is/are completed within the coherence time. In this way, in the solution of performing the two-bit gate operation on the Qubit and another Qubit that is far away from the Qubit, a large quantity of steps need to be performed in the quantum state exchange operation, so that a quantity of gate operations required for implementing an algorithm that can be performed within coherence time is greatly reduced, and complexity of a corresponding algorithm that can be implemented is also reduced.

Due to probabilistic collapse of quantum computing measurement, to obtain a desired calculation result, steps of the algorithm need to be operated and measured repeatedly. After each operation and measurement is completed, the system needs to be initialized again, that is, a state of each Qubit is prepared into a known quantum state, for example, may be a ground state, that is, a state in which the Qubit is "0". Therefore, to obtain a final calculation result quickly, a fast and accurate initialization process is also a necessary technology in quantum computing.

In an actual application, as a quantity of bits in the Qubit chip increases, coupling between the Qubits becomes complex, and a phenomenon such as the microwave pulse crosstalk also exists between a plurality of bits. Due to these problems, a high fidelity gate operation cannot be implemented by using a pulse in a simple form. For these problems, a computer may be used to optimize the pulse waveform, and complex multi-bit global interaction is considered, to design a pulse waveform with high fidelity and high robustness.

For example, a gradient rise optimization method (GRAPE) is a numerical optimization pulse technology. The following uses a GRAPE pulse as an example to describe a basic idea of a numerical optimization pulse. It may be understood that the GRAPE pulse may be replaced with various numerical optimization pulses. This is not limited in this embodiment of this application.

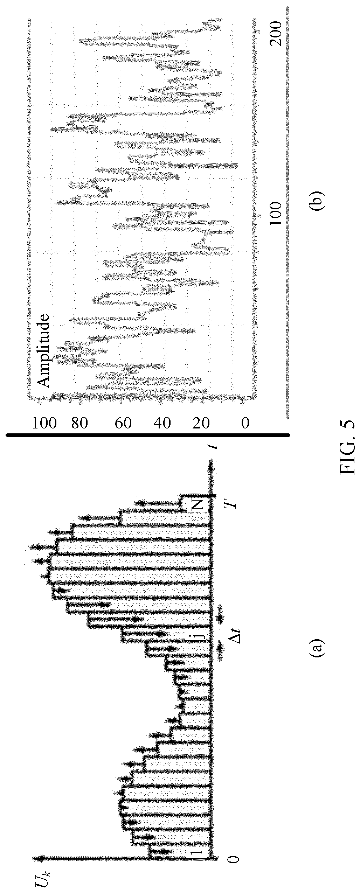

As shown in FIG. 5, a microwave pulse with total duration of t may be divided into N pieces, and each small segment of pulse has an independent amplitude and phase. By performing numerical optimization search on the amplitude and phase of each small segment of pulse, a group of solutions can be finally found, so that total pulse effect is optimal, and high operation fidelity can be achieved. A pulse obtained through numerical optimization does not have an analytical waveform. By optimizing a large quantity of parameters, factors such as freedom of various manipulations, field inhomogeneity, and crosstalk to a surrounding bit can be greatly utilized. A principle thereof is simple and direct, and numerical calculation can be implemented on a multi-bit complex problem to solve a high-fidelity waveform. This is not limited to implementing only simple the two-bit manipulation and can directly implement a multi-bit gate manipulation (which may also be referred to as the multi-bit operation). In an example, a two-bit gate operation in a 12-bit global system and a five-bit arbitrary global gate operation may be directly implemented on a nuclear-magnetic resonance system by using the numerical optimization pulse method.

However, as the quantity of Qubits in the system increases, dimensions of a matrix operation processed by using the numerical optimization pulse technology in the calculation process exponentially increase, and consequently a large quantity of classical computing resources need to be consumed, which is not suitable for large-scale quantum computing. In view of this, in this application, a blockable superconducting quantum chip is designed, and a set of operation solutions is designed for the superconducting quantum chip by using the numerical optimization method, to perform an operation on the superconducting Qubit in the large-scale superconducting quantum computing system.

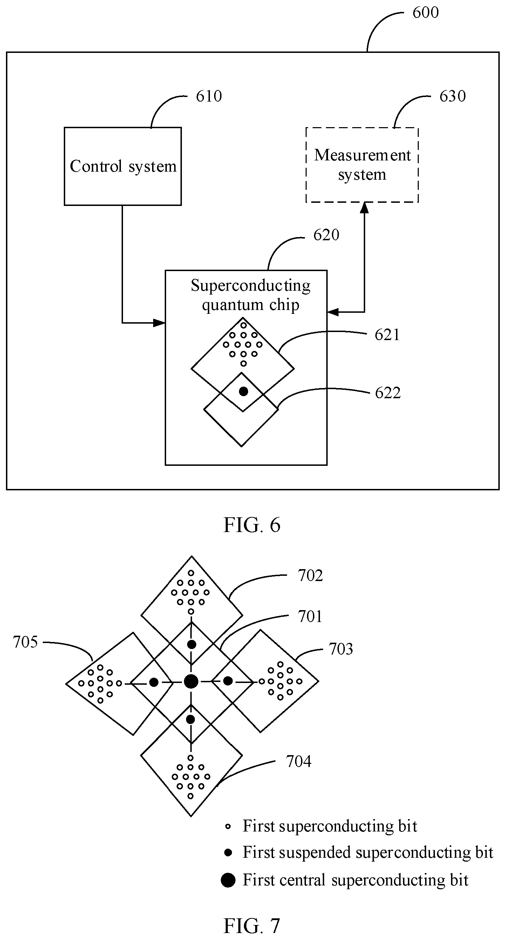

FIG. 6 is a schematic block diagram of a superconducting quantum computing system 600 according to an embodiment of this application. As shown in FIG. 6, the system 600 includes a control system 610 and a superconducting quantum chip 620. The superconducting quantum chip 620 includes a Qubit, and the Qubit is used to implement quantum computing. The control system 610 may include a control circuit, and the control circuit is configured to control a state of the Qubit in the superconducting quantum chip 620, to perform a calculation operation. Optionally, the system 600 may further include a measurement system 630, and the measurement system 630 is configured to read a final state of the Qubit in the superconducting quantum chip 620, and obtain a measurement result based on the final state of the Qubit.

For example, the control system 610 may control modulation pulse signals such as a microwave source and a DAC according to a calculation operation requirement, input a series of microwave pulse sequences to the superconducting quantum chip 620, and perform an operation on a quantum state of the Qubit in the superconducting quantum chip 620. After all operations are completed, the measurement system 630 may output a measurement pulse signal to the superconducting quantum chip 620, and the superconducting quantum chip 620 may return a signal to the measurement system 630 based on the measurement pulse signal. The measurement system 630 obtains status information of the Qubit in the superconducting quantum chip 620 based on a change of the returned signal, and further obtains a calculation result.

In a specific example, the control system 610 may be devices such as a microwave source, an arbitrary wave generator, an integrated measurement and control board. The superconducting quantum chip 620 may further include a read cavity structure, and the read cavity structure is configured to read the quantum state in the chip. This is not limited in this embodiment of this application.

In addition, the system 600 may further include a chiller that provides a low-temperature environment and a vacuum system, so that the superconducting quantum chip 620 can be placed in the low-temperature environment and a vacuum environment to eliminate external interference as much as possible.

In this embodiment of this application, the superconducting quantum chip 620 may include a connection region and a central exchange region. There may be at least two connection regions. The central exchange region includes a first central exchange region. The superconducting quantum chip 620 includes at least two connection regions and the first central exchange region. Each connection region of the at least two connection regions includes a first suspended superconducting bit and at least one first superconducting bit, and the first central exchange region includes the first suspended superconducting bit. There may be one, two, or more first suspended superconducting bits in each connection region.

Still refer to FIG. 6. FIG. 6 shows an example of a connection region 621 and a first central exchange region 622 in the superconducting quantum chip 620. The connection region 621 may include at least one first superconducting bit (that is, a Qubit) and one first suspended superconducting bit (that is, a suspended Qubit), and the first central exchange region 622 may include a first suspended superconducting bit (that is, the first suspended superconducting bit in the connection region 621). It should be noted that an example in which the connection region 621 includes one first suspended superconducting bit is used herein for description. However, this application is not limited thereto. For example, there may also be two or more first suspended superconducting bits in the connection region 621. In this case, coupling manners and control manners between all first suspended superconducting bits and surrounding bits may be the same or similar. Details are not described again.

In other words, the first suspended superconducting bit herein is not only a superconducting bit belonging to the connection region 621, but also a superconducting bit belonging to the first central exchange region 622. In this case, the connection region 621 may be referred to as a connection region associated with the first central exchange region 622, that is, the connection region 621 is a connection region corresponding to the first suspended superconducting bit included in the first central exchange region 622.

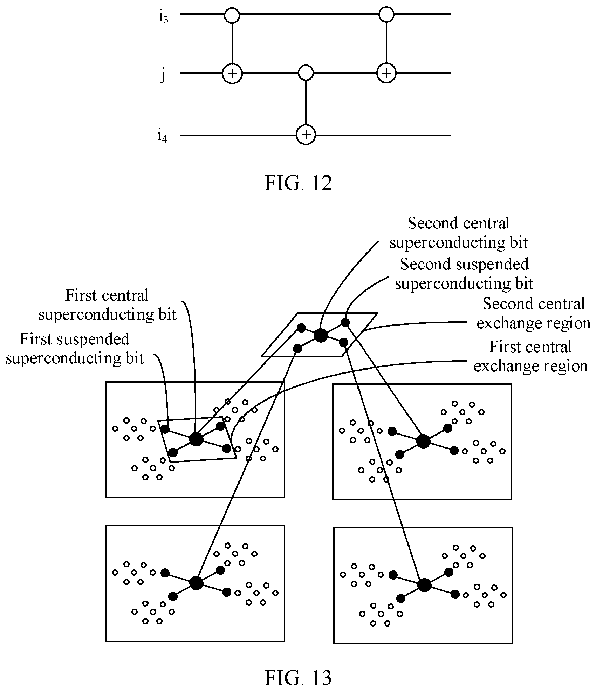

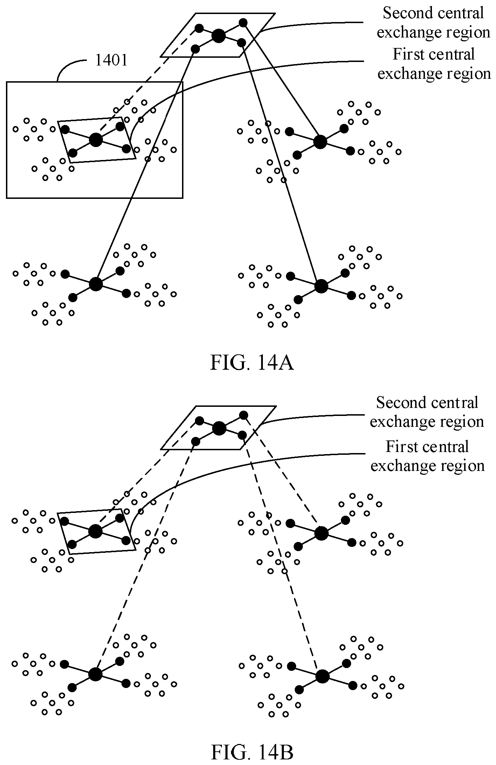

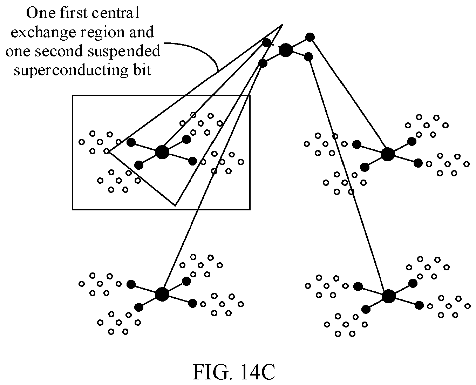

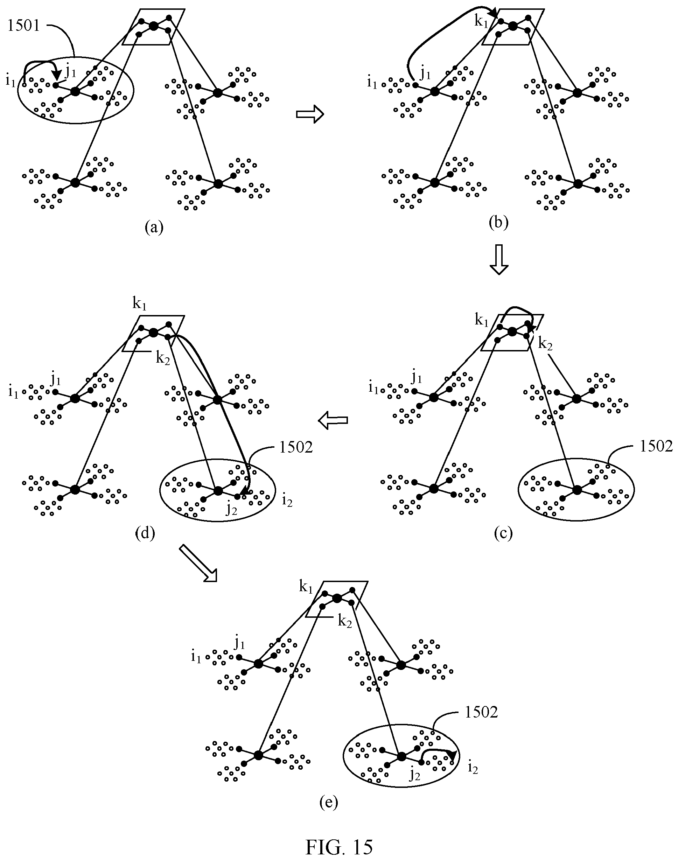

It should be noted that in FIG. 6 and the superconducting quantum chip shown in FIG. 7, FIG. 8, FIG. 10, FIG. 11, FIG. 13, FIG. 14A, FIG. 14B, FIG. 14C, FIG. 15, and FIG. 17 below, a boundary line of the connection region or the central exchange region is schematically shown. This is merely for a person skilled in the art to understand more conveniently or know more clearly the superconducting bit included in the "connection region" or the "central exchange region" in this embodiment of this application. Actually, in a manufacturing process of the superconducting quantum chip or a structure of the superconducting quantum chip, these boundary lines do not exist, and do not appear. It should be understood that for representation manners of different types of bits in FIG. 14A, FIG. 14B, FIG. 14C, and FIG. 15, refer to FIG. 13.

It should be further noted that in the superconducting quantum chip 620 shown in FIG. 6, similar to the connection region 621, a connection region other than the connection region 621 also includes a first suspended superconducting bit and at least one first superconducting bit. Similarly, the first central exchange region 622 further includes the first suspended superconducting bit in the connection region other than the connection region 621. In addition, a quantity of first superconducting bits included in the connection region other than the connection region 621 may be the same as or different from a quantity of first superconducting bits included in the connection region 621. This is not limited in this embodiment of this application.

The first suspended superconducting bit in the connection region 621 may be coupled to at least one first superconducting bit in the connection region 621, for example, coupled to one first superconducting bit, two or more first superconducting bits, or all first superconducting bits in the connection region. This is not limited in this embodiment of this application. For example, the first suspended superconducting bit and the first superconducting bit may be coupled by using a capacitor, a cavity, a coupler, or the like, so that the first suspended superconducting bit and the first superconducting bit interact with each other. This is not limited in this embodiment of this application.

It should be noted that, a coupling manner between the first suspended superconducting bit in the connection region other than the connection region 621 in the superconducting quantum chip 620 and at least one first superconducting bit in the connection region other than the connection region 621 is the same as a coupling manner between the first suspended superconducting bit in the connection region 621 and the at least one first superconducting bit in the connection region 621, and details are not described again.

In some optional embodiments, when there are at least two first superconducting bits in the connection region, the at least two first superconducting bits may be strongly coupled to each other. For example, each first superconducting bit in the connection region may be coupled to one or more other first superconducting bits in the connection region or all other first superconducting bits in the connection region. This is not limited in this embodiment of this application. The at least two first superconducting bits may be coupled by using a capacitor, a cavity, a coupler, or the like, so that the at least two first superconducting bits interact with each other. A coupling form, connectivity, and the like between the at least two first superconducting bits are not limited in this embodiment of this application. Herein, the connectivity may represent a minimum quantity of first superconducting bits that are coupled to another superconducting bit.

In this embodiment of this application, the first central exchange region 622 is used to transfer a quantum operation between superconducting bits in different connection regions (not shown in Fig. 6). In other words, the superconducting bits in the different connection regions may be transited by using the first central exchange region to implement the quantum operation.

For example, when the first central exchange region 622 includes first suspended superconducting bits corresponding to at least two connection regions, the first central exchange region 622 is used to transfer a quantum operation between superconducting bits in different connection regions in the at least two connection regions.

In a specific example, when the first central exchange region 622 includes a first suspended superconducting bit in a connection region #1 and a first suspended superconducting bit in a connection region #2, the first central exchange region 622 is used to transfer a quantum operation between the superconducting bit in the connection region #1 and the superconducting bit in the connection region #2. For example, a quantum state exchange operation may be performed on a target superconducting bit #1 in the connection region #1 and the first suspended superconducting bit in the first central exchange region 622, a quantum state of the target superconducting bit #1 is exchanged to the first suspended bit in the connection region #2, and a two-bit gate operation is performed on the target superconducting bit #2 and the first suspended bit, so that a quantum operation between the target superconducting bit #1 in the connection region #1 and the target superconducting bit #2 in the connection region #2 is transferred by using the first central exchange region 622.

In this embodiment of this application, the control system 610 may include a control circuit, and the control circuit is configured to control a coupling strength between the first suspended superconducting bit and the first superconducting bit. In other words, in this embodiment of this application, coupling between the first suspended superconducting bit and the first superconducting bit is adjustable, that is, a value of the coupling strength between the first suspended superconducting bit and the first superconducting bit is adjustable.

For example, the control circuit may be configured to control the coupling strength between the first suspended superconducting bit and the first superconducting bit to be less than a first preset value, to disconnect the coupling between the first suspended superconducting bit and the first superconducting bit. Alternatively, the control circuit may be configured to control the coupling strength between the first suspended superconducting bit and the first superconducting bit to be greater than a second preset value, so that the first suspended superconducting bit and the first superconducting bit interact with each other.

When the control circuit is configured to control a coupling strength between the first suspended superconducting bit in the connection region and another superconducting bit to be less than a first preset value, that is, when coupling between the first suspended superconducting bit and the another superconducting bit is disconnected, the connection region may be isolated, thereby obtaining a divided subspace.

When the control circuit is configured to control coupling between a first suspended superconducting bit in each connection region and a first superconducting bit coupled to the first suspended superconducting bit in the connection region, the first central exchange region may be isolated, thereby obtaining a divided subspace.

In some optional embodiments, the first suspended superconducting bit is coupled to one first superconducting bit in a connection region in which the first suspended superconducting bit is located. In other words, the first suspended superconducting bit in each connection region may be coupled to one first superconducting bit or a few first superconducting bits in the connection region, so that the central exchange region can be isolated by disconnecting the coupling between the first suspended superconducting bit and the one first superconducting bit or by disconnecting the coupling between the first suspended superconducting bit and the few first superconducting bits, thereby more conveniently and effectively obtaining a divided subspace.

Therefore, in the superconducting quantum computing system, a single connection region or the central exchange region can be isolated on the superconducting quantum chip by controlling the coupling strength between the first suspended superconducting bit and the first superconducting bit, thereby effectively obtaining the divided subspace. In the divided subspace, any single-bit or multi-bit logic gate manipulation may be implemented, and a two-bit gate manipulation between different connection regions may be transited by using the central exchange region. Therefore, in this embodiment of this application, various quantum manipulations required for general quantum computing can be implemented on a large-scale superconducting quantum computing chip.

For example, an overall function inside the divided subspace may be considered by using the numerical optimization pulse technology, to implement any single-bit or multi-bit logic gate manipulation with high fidelity inside the connection region or the central exchange region, and implement transition, by using the central exchange region, of the two-bit quantum manipulation between the different connection regions by using several numerical optimization pulses. This is not limited in this embodiment of this application.

In addition, in this embodiment of this application, there may be high connectivity between first superconducting bits in the connection region, and each bit may interact with a plurality of bits. In this way, inside the connection region, a complex line may be implemented by using a numerical optimization pulse waveform, thereby helping save line time and avoiding excessive decoherence. In addition, the numerical optimization pulse waveform can be used to help increase robustness to factors such as environmental noise and microwave crosstalk, thereby improving fidelity of the quantum manipulation.

In this embodiment of this application, the first central exchange region includes the first suspended superconducting bit in each connection region. The first suspended superconducting bits in the at least two connection regions may be different superconducting bits, or the first suspended superconducting bits in the at least two connection regions may be a same superconducting bit. This is not limited in this application. The following separately describes two implementations and corresponding quantum manipulation manners.

### First implementation

In this implementation, the first suspended superconducting bits in the at least two connection regions may be different superconducting bits. In this case, the first central exchange region further includes one central superconducting bit (which may be referred to as a first central superconducting bit). In other words, in this implementation, the first central exchange region includes the first central superconducting bit and first suspended superconducting bits respectively corresponding to the at least two connection regions. The first central superconducting bit is coupled to a first suspended superconducting bit in each connection region.

The control circuit may be further configured to control a coupling strength between the first central exchange region and the first suspended superconducting bit. In other words, coupling between the first central superconducting bit and the first suspended superconducting bit is adjustable, that is, a value of the coupling strength between the first central superconducting bit and the first suspended superconducting bit is adjustable.

For example, the control circuit may be configured to control the coupling strength between the first central superconducting bit and the first suspended superconducting bit to be less than a first preset value, to disconnect the coupling between the first central superconducting bit and the first suspended superconducting bit. Alternatively, the control circuit may be configured to control the coupling strength between the first central superconducting bit and the first suspended superconducting bit to be greater than a second preset value, so that the first central superconducting bit and the first suspended superconducting bit interact with each other.

FIG. 7 shows an example of a first central exchange region and at least two connection regions in this implementation. As shown in FIG. 7, the superconducting quantum chip 620 includes a first central exchange region 701, a connection region 702, a connection region 703, a connection region 704 and a connection region 705. The first central exchange region 701 includes one first central superconducting bit, a first suspended superconducting bit in the connection region 702, a first suspended superconducting bit in the connection region 703, a first suspended superconducting bit in the connection region 704, and a first suspended superconducting bit in the connection region 705. In addition, the first central superconducting bit is coupled to the first suspended superconducting bit in each of the connection regions 702 to 705, and the first suspended superconducting bit in each connection region is coupled to at least one first superconducting bit in the connection region. The control circuit may be configured to control a coupling strength between the first central superconducting bit and the first suspended superconducting bit, and control a coupling strength between the first suspended superconducting bit and the first superconducting bit.

It should be noted that FIG. 7 is described only by using an example in which the first central exchange region includes the first suspended superconducting bits in the four connection regions. However, this embodiment of this application is not limited thereto. For example, the first central exchange region may further include more or fewer first suspended superconducting bits in, for example, three or five connection regions.

In addition, for the coupling manner between the first suspended superconducting bit in each connection region and the at least one first superconducting bit in FIG. 7, and the coupling manner between the at least two first superconducting bits, refer to the description of the connection region 621 in FIG. 6. Details are not described again.

Still refer to FIG. 7. When the control circuit is configured to control a coupling strength between the first suspended superconducting bit in the connection region and the first central superconducting bit to be less than a first preset value, that is, when coupling between the first suspended superconducting bit and the first central superconducting bit is disconnected, the connection region may be isolated, thereby obtaining a divided subspace. For example, when the control circuit is configured to control the coupling strength between the first suspended superconducting bit in the connection region 702 and the first central superconducting bit to be less than a first preset value, the connection region 702 may be isolated. A manner of isolating another connection region is similar to the manner of isolating the connection region 702, and details are not described again.

When the control circuit is configured to control coupling between a first suspended superconducting bit in each connection region and a first superconducting bit coupled to the first suspended superconducting bit, the first central exchange region may be isolated, thereby obtaining a divided subspace. For example, when the control circuit is configured to control coupling between a first suspended superconducting bit in each of the connection region 702 to the connection region 705 and a first superconducting bit coupled to the first suspended superconducting bit in each connection region, the first central exchange region 701 may be isolated, thereby obtaining a divided subspace.

In this embodiment of this application, a single connection region or a central exchange region can be isolated on the superconducting quantum chip by controlling the coupling strength between the first suspended superconducting bit and the first superconducting bit or controlling the coupling strength between the first suspended superconducting bit and the first central superconducting bit. Therefore, in this embodiment of this application, only a few adjustable coupling manners are required for the superconducting quantum chip, to effectively obtain the divided subspace, thereby helping simplify a chip process requirement.

In a chip structure shown in FIG. 7, a quantum manipulation may be performed on superconducting bits on the superconducting quantum chip for a single block (for example, the single connection region or the central exchange region) or for different blocks. The following separately describes manipulation manners in two cases.

Case 1: For a quantum manipulation inside the single connection region or the central exchange region, a pulse waveform may be used to implement the quantum manipulation on a superconducting bit inside a corresponding subspace.

For example, a coupling strength between a suspended superconducting bit and a surrounding superconducting bit may first be adjusted, so that a target manipulation region may be considered as a small independent subspace. Then, inside the independent subspace, a pulse waveform for implementing the quantum manipulation on the superconducting bit in the subspace may be obtained by using the numerical optimization technology.

In some optional embodiments, when the at least two connection regions include a first connection region, for a quantum manipulation on a superconducting bit in the first connection region, the control circuit is further configured to: control a coupling strength between a first suspended superconducting bit in the first connection region and the first central superconducting bit to be less than a first preset value, and send a first pulse waveform, where the first pulse waveform is used to perform a quantum operation on a superconducting bit in the first connection region. Herein, the superconducting bit in the first connection region includes a first superconducting bit and the first suspended superconducting bit in the first connection region.

When the control circuit controls the coupling strength between the first suspended superconducting bit in the first connection region and the first central superconducting bit to be less than the first preset value, the coupling strength between the first suspended superconducting bit and the first central superconducting bit can be close to 0, so that coupling between the first suspended superconducting bit and the first central superconducting bit is disconnected, and the first connection region may be considered as an isolated subsystem. Then, a high-fidelity first pulse waveform may be found in the first connection region by using the numerical optimization technology, to implement a single-bit quantum operation, a two-bit quantum operation, or a multi-bit quantum operation on the superconducting bit in the first connection region.

For example, the first connection region may be the connection region 702, the connection region 703, the connection region 704, or the connection region 705 in FIG. 7. This is not limited in this embodiment of this application.

Therefore, in this embodiment of this application, the coupling strength between the first suspended superconducting bit in the connection region and the central superconducting bit in the central exchange region is controlled to be less than the first preset value, so that the connection region can be isolated on the superconducting quantum chip. Inside the connection region, any single-bit or multi-bit logic gate operation may be implemented by using the numerical optimization technology. Therefore, in this embodiment of this application, various quantum operations required for general quantum computing can be implemented on a large-scale superconducting quantum chip.

In some optional embodiments, for a quantum manipulation on a superconducting bit in the first central exchange region, the control circuit is further configured to: control a coupling strength between the first suspended superconducting bit in each connection region associated with the first central exchange region and a first superconducting bit coupled to the first suspended superconducting bit to be less than a first preset value, and send a second pulse waveform, where the second pulse waveform is used to perform a quantum operation on a superconducting bit in the first central exchange region. Herein, the superconducting bit in the first central exchange region includes a first central superconducting bit and the first suspended superconducting bit in each connection region.

When the control circuit controls the coupling strength between the first suspended superconducting bit in each connection region and the first superconducting bit coupled to the first suspended superconducting bit to be less than the first preset value, the coupling strength between the first suspended superconducting bit in each connection region and each first superconducting bit in the connection region can be close to 0, so that coupling between the first suspended superconducting bit in each connection region and the first superconducting bit in each connection region is disconnected, and the first central exchange region may be considered as an isolated subsystem. Then, a high-fidelity second pulse waveform may be found in the first central exchange region by using the numerical optimization technology, to implement a single-bit quantum operation, a two-bit quantum operation, or a multi-bit quantum operation on the superconducting bit in the first central exchange region.

For example, for the superconducting chip in FIG. 7, the control circuit may control the coupling strength between the first suspended superconducting bit in the connection region 702 and the first superconducting bit in the connection region 702 to be less than the first preset value, control the coupling strength between the first suspended superconducting bit in the connection region 703 and the first superconducting bit in the connection region 703 to be less than the first preset value, control the coupling strength between the first suspended superconducting bit in the connection region 704 and the first superconducting bit in the connection region 704 to be less than the first preset value, and control the coupling strength between the first suspended superconducting bit in the connection region 705 and the first superconducting bit in the connection region 705 to be less than the first preset value, so that the first central exchange region 701 is considered as an isolated subsystem. Then, the numerical optimization technology may be used inside the first central exchange region 701, to implement a single-bit quantum operation, a two-bit quantum operation, or a multi-bit quantum operation on the superconducting bit in the first central exchange region.

It should be noted that, in this embodiment of this application, the coupling strength between the first suspended superconducting bit and the first superconducting bit coupled to the first suspended superconducting bit is less than the first preset value, that is, a coupling strength between the first suspended superconducting bit and a first superconducting bit coupled (that is, adjustably coupled) to the first suspended superconducting bit is less than the first preset value. For example, in the first connection region 702, the first suspended superconducting bit is adjustably coupled to one first superconducting bit, and that "the coupling strength between the first suspended superconducting bit and the first superconducting bit coupled to the first suspended superconducting bit is less than the first preset value" means that a coupling strength between the first suspended superconducting bit and the first superconducting bit is less than the first preset value. For example, in the first connection region 702, the first suspended superconducting bit is adjustably coupled to two or more first superconducting bits, and that "the coupling strength between the first suspended superconducting bit and the first superconducting bit coupled to the first suspended superconducting bit is less than the first preset value" means that coupling strengths between the first suspended superconducting bit and all first superconducting bits in the two or more first superconducting bits each are less than the first preset value.

Therefore, in this embodiment of this application, the coupling strength between each first suspended superconducting bit in the central exchange region and the first superconducting bit coupled to the first suspended superconducting bit is controlled to be less than the first preset value, so that the central exchange region can be isolated on the superconducting quantum chip. Inside the central exchange region, any single-bit or multi-bit logic gate operation may be implemented by using the numerical optimization technology. Therefore, in this embodiment of this application, various quantum operations required for general quantum computing can be implemented on a large-scale superconducting quantum chip.

Case 2: For a quantum manipulation between different connection regions, a plurality of pulse waveforms may be used to implement the quantum manipulation on superconducting bits between the different connection regions.

In some optional embodiments, when the at least two connection regions include a second connection region and a third connection region, for a quantum manipulation between superconducting bits in the second connection region and the third connection region, the control circuit is further configured to: control a coupling strength between a first suspended superconducting bit in the second connection region and the first central superconducting bit to be less than a first preset value, so that the coupling strength between the first suspended superconducting bit in the second connection region and the first central superconducting bit is close to 0; control a coupling strength between the first suspended superconducting bit in the second connection region and a first superconducting bit coupled to the first suspended superconducting bit to be greater than a second preset value; and send a third pulse waveform, where the third pulse waveform is used to perform a two-bit operation on one first superconducting bit (that is, a first target superconducting bit) in the second connection region and the first suspended superconducting bit in the second connection region.

When the control circuit controls the coupling strength between the first suspended superconducting bit in the second connection region and the first central superconducting bit to be less than the first preset value, and the coupling strength between the first suspended superconducting bit in the second connection region and the first superconducting bit coupled to the first suspended superconducting bit to be greater than the second preset value, the second connection region may be considered as an isolated subsystem. Then, a high-fidelity third pulse waveform may be found in the second connection region by using the numerical optimization technology, to implement a two-bit quantum operation on the first target superconducting bit and the first suspended superconducting bit in the second connection region.

It should be noted that, in this embodiment of this application, the coupling strength between the first suspended superconducting bit and the first superconducting bit coupled to the first suspended superconducting bit is greater than the second preset value, that is, a coupling strength between the first suspended superconducting bit and a first superconducting bit coupled (that is, adjustably coupled) to the first suspended superconducting bit is greater than the second preset value. For example, in the first connection region, the first suspended superconducting bit is adjustably coupled to one first superconducting bit, and that "the coupling strength between the first suspended superconducting bit and the first superconducting bit coupled to the first suspended superconducting bit is greater than the second preset value" means that a coupling strength between the first suspended superconducting bit and the first superconducting bit is greater than the second preset value. For example, in the first connection region, the first suspended superconducting bit is adjustably coupled to two or more first superconducting bits, and that "the coupling strength between the first suspended superconducting bit and the first superconducting bit coupled to the first suspended superconducting bit is greater than the second preset value" means that coupling strengths between the first suspended superconducting bit and all first superconducting bits in the two or more first superconducting bits each are greater than the second preset value.

It should be further noted that, when the connection region includes at least two first superconducting bits, the at least two first superconducting bits are strongly coupled to each other, and the first suspended superconducting bit may be adjustably coupled to some of the at least two first superconducting bits, it may be considered that the first suspended superconducting bit is directly coupled or indirectly coupled to each first superconducting bit in the connection region. For example, when the first suspended superconducting bit is adjustably coupled to one first superconducting bit in the connection region, and the first superconducting bit is strongly coupled to another first superconducting bit in the connection region, it may be considered that the first suspended superconducting bit is indirectly coupled to the another first superconducting bit. Based on this, in this embodiment of this application, the control circuit can perform a two-bit operation on any first superconducting bit in the connection region and the first suspended superconducting bit in the connection region by using a pulse waveform.

Then, the control circuit is further configured to: control the coupling strength between the first suspended superconducting bit in the second connection region and the first central superconducting bit to be greater than the second preset value, that is, restore an interaction between the first suspended superconducting bit in the second connection region and the first central superconducting bit; control a coupling strength between a first suspended superconducting bit in the third connection region and the first central superconducting bit to be greater than the second preset value, that is, enable the first suspended superconducting bit in the third connection region and the first central superconducting bit to be coupled (that is, interact with each other); then control a coupling strength between the first suspended superconducting bit in each connection region and a first superconducting bit coupled to the first suspended superconducting bit to be less than the first preset value; and send a fourth pulse waveform, where the fourth pulse waveform is used to perform a two-bit operation on the first suspended superconducting bit in the second connection region and the first suspended superconducting bit in the third connection region in the first central exchange region.

When the control circuit controls the coupling strength between the first suspended superconducting bit in each connection region and the first superconducting bit coupled to the first suspended superconducting bit to be less than the first preset value, controls the coupling strength between the first suspended superconducting bit in the second connection region and the first central superconducting bit to be greater than the second preset value, and controls the coupling strength between the first suspended superconducting bit in the third connection region and the first central superconducting bit to be greater than the second preset value, the first central exchange region may be considered as an isolated subsystem. Then, a high-fidelity fourth pulse waveform may be found in the first central exchange region by using the numerical optimization technology, to implement a two-bit operation on the first suspended superconducting bit corresponding to the second connection region and the first suspended superconducting bit corresponding to the third connection region in the first central exchange region.

Then, the control circuit is further configured to: control a coupling strength between the first suspended superconducting bit in the third connection region and a first superconducting bit coupled to the first suspended superconducting bit to be greater than the second preset value, that is, restore an interaction between the first suspended superconducting bit in the third connection region and the first superconducting bit coupled to the first suspended superconducting bit; then control a coupling strength between the first suspended superconducting bit in the third connection region and the first central superconducting bit to be less than the first preset value; and send a fifth pulse waveform, where the fifth pulse waveform is used to perform a two-bit operation on one first superconducting bit in the third connection region (that is, a second target superconducting bit) and the first suspended superconducting bit in the third connection region.

When the control circuit controls the coupling strength between the first suspended superconducting bit in the third connection region and the first central superconducting bit to be less than the first preset value, and controls the coupling strength between the first suspended superconducting bit in the third connection region and the first superconducting bit coupled to the first suspended superconducting bit to be greater than the second preset value, the third connection region may be considered as an isolated subsystem. Then, a high-fidelity fifth pulse waveform may be found in the third connection region by using the numerical optimization technology, to implement a two-bit quantum operation on the first suspended superconducting bit in the third connection region and the second target superconducting bit. Based on the foregoing operations, a two-bit quantum operation may be implemented on the first target superconducting bit and the second target superconducting bit.

Therefore, in this embodiment of this application, transition is performed on the two-bit gate operation between the superconducting bits in the two different connection regions by using the central exchange region, so that a two-bit gate operation between superconducting bits in any two connection regions associated with the central exchange region can be implemented, thereby helping implement various quantum operations required for general quantum computing on a large-scale superconducting quantum chip.

Optionally, the control circuit is further configured to: control the coupling strength between the first suspended superconducting bit in the third connection region and the first central superconducting bit to be greater than the second preset value, control the coupling strength between the first suspended superconducting bit in each connection region and the first superconducting bit coupled to the first suspended superconducting bit to be less than the first preset value, and send a sixth pulse waveform, where the sixth pulse waveform is used to perform a reset operation on the first suspended superconducting bit in the third connection region in the first central exchange region.

When the control circuit controls the coupling strength between the first suspended superconducting bit in each connection region and the first superconducting bit coupled to the first suspended superconducting bit to be less than the first preset value, and controls the coupling strength between the first suspended superconducting bit in the third connection region and the first central superconducting bit to be greater than the second preset value, the first central exchange region may be considered as an isolated subsystem. Then, a high-fidelity sixth pulse waveform may be found in the first central exchange region by using the numerical optimization technology, to implement a reset operation on the first suspended superconducting bit corresponding to the third connection region in the first central exchange region.

The control circuit is further configured to: control the coupling strength between the first suspended superconducting bit in the second connection region and the first superconducting bit coupled to the first suspended superconducting bit in the second connection region to be greater than the second preset value, control the coupling strength between the first suspended superconducting bit in the second connection region and the first central superconducting bit to be less than the first preset value, and send a seventh pulse waveform, where the seventh pulse waveform is used to perform a reset operation on the first suspended superconducting bit in the second connection region.

When the control circuit controls the coupling strength between the first suspended superconducting bit in the second connection region and the first central superconducting bit to be less than the first preset value, and controls the coupling strength between the first suspended superconducting bit in the second connection region and the first superconducting bit coupled to the first suspended superconducting bit to be greater than the second preset value, the second connection region may be considered as an isolated subsystem. Then, a high-fidelity seventh pulse waveform may be found in the second connection region by using the numerical optimization technology, to implement a reset operation on the first suspended superconducting bit in the second connection region.

Therefore, in this embodiment of this application, a single connection region or a central exchange region is isolated, to implement a reset operation on a first suspended superconducting bit used for transiting a quantum operation between superconducting bits in different connection regions, so that a quantum state of the first suspended superconducting bit can be restored, thereby avoiding impact on another superconducting bit when the quantum operation between the superconducting bits in the different connection regions is performed.

It should be noted that, in the first central exchange region, the first central superconducting bit is coupled to the first suspended superconducting bit in each connection region. In this case, it may be considered that each first suspended superconducting bit in the first central exchange region is indirectly coupled to each other. Based on this, in this embodiment of this application, the control circuit can perform a two-bit operation, for example, a reset operation, on any two first suspended superconducting bits in the first exchange region by using a pulse waveform.

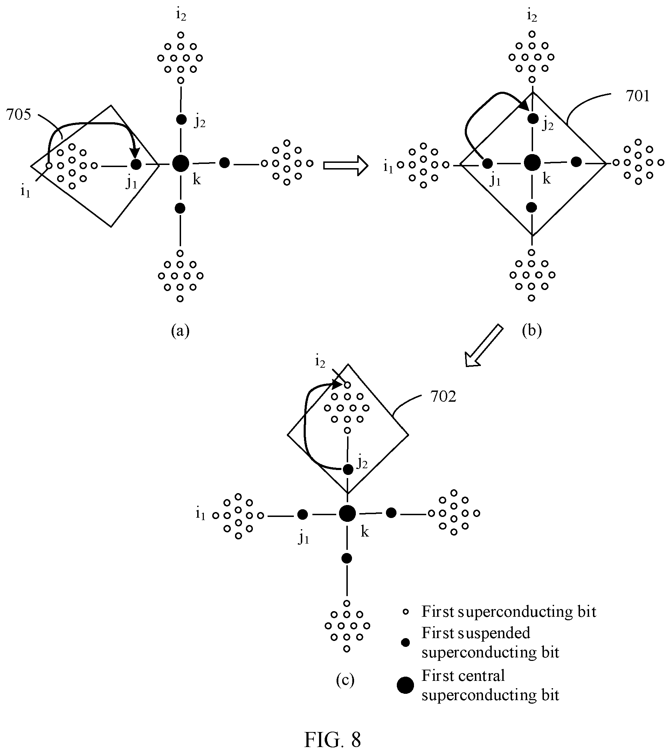

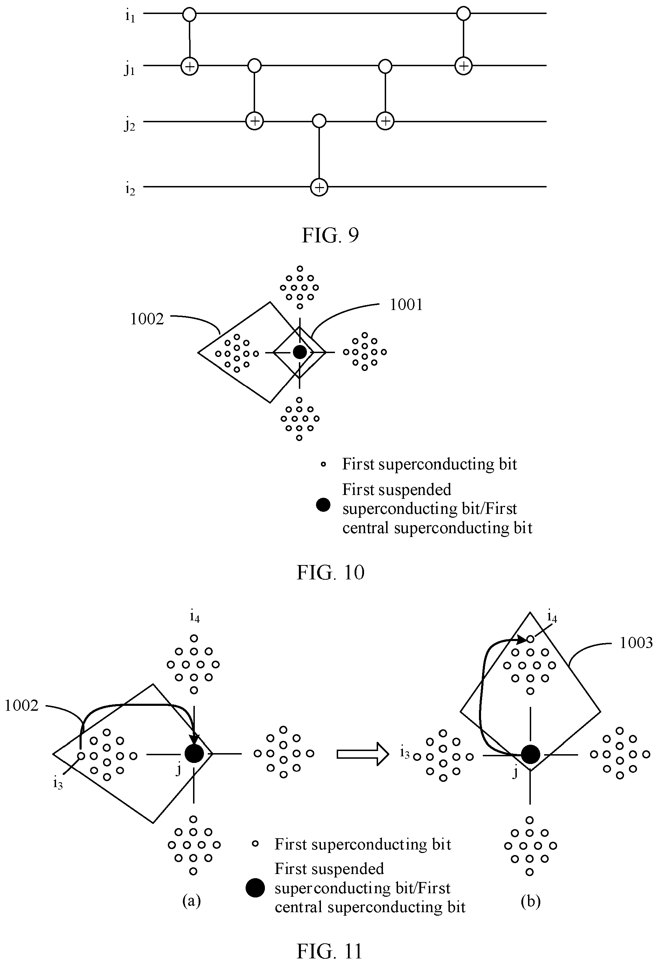

A specific example of a quantum manipulation between different connection regions is described below with reference to FIG. 8 and FIG. 9.

In the examples in FIG. 8 and FIG. 9, a two-bit CNOT gate operation needs to be performed on a first superconducting bit i₁ in the connection region 705 and a first superconducting bit i₂ in the connection region 702. As shown in FIG. 9, a two-bit gate operation may be split into five two-bit CNOT gate operations in a same region block, and the two-bit CNOT gate operation between the two first superconducting bits i₁ and i₂ may be transferred by using first suspended superconducting bits j₁ and j₂ in the first central exchange region 701. Specific manipulation steps may be as follows:

First, the control circuit may control a coupling strength between the first suspended superconducting bit j₁ in the connection region 705 and a first central superconducting bit k in the first central exchange region 701 to be less than a first preset value, so that the coupling strength is approximately 0, and control a coupling strength between the first suspended superconducting bit j₁ and a first superconducting bit in the connection region 705 to be greater than a second preset value, thereby isolating the connection region 705. In this case, as shown in (a) in FIG. 8 and FIG. 9, the control circuit may search out a high-fidelity pulse waveform #1, and send the pulse waveform #1 to the superconducting quantum chip, to implement the two-bit CNOT gate operation on the first superconducting bit i₁ and the first suspended superconducting bit j₁ in the connection region 705.

Then, the control circuit may control the coupling strength between the first suspended superconducting bit j₁ in the connection region 705 and the first central superconducting bit k in the first central exchange region 701 to be greater than the second preset value, to restore coupling between the first suspended superconducting bit j₁ and the first central superconducting bit k; control a coupling strength between the first suspended superconducting bit j₂ in the connection region 702 and the first central superconducting bit k in the first central exchange region 701 to be greater than the second preset value, so that the first suspended superconducting bit j₂ and the first central superconducting bit k are coupled (that is, interact with each other); and controls a coupling strength between each first suspended superconducting bit in the first central exchange region 701 and a first superconducting bit coupled to each first suspended superconducting bit to be less than the first preset value, so that the coupling strength between each first suspended superconducting bit and the first superconducting bit in a connection region corresponding to the first suspended superconducting bit is approximately 0, thereby isolating the first central exchange region 701. In this case, as shown in (b) in FIG. 8 and FIG. 9, the control circuit may search out a high-fidelity pulse waveform #2, and send the pulse waveform #2 to the superconducting quantum chip, to implement the two-bit CNOT gate operation on the first suspended superconducting bits j₁ and j₂ in the first central exchange region 701.

Then, the control circuit may control a coupling strength between the first suspended superconducting bit j₂ in the connection region 702 and a first superconducting bit coupled to the first suspended superconducting bit j₂ to be greater than the second preset value, to restore coupling between the first suspended superconducting bit j₂ and the first superconducting bit coupled to the first suspended superconducting bit j₂; and control the coupling strength between the first suspended superconducting bit j₂ in the connection region 702 and the first central superconducting bit k to be less than the first preset value, so that the coupling strength between the first suspended superconducting bit j₂ and the first central superconducting bit k is approximately 0, thereby isolating the connection region 702. In this case, as shown in (c) in FIG. 8 and FIG. 9, the control circuit may search out a high-fidelity pulse waveform #3, and send the pulse waveform #3 to the superconducting quantum chip, to implement the two-bit CNOT gate operation on the first suspended superconducting bit j₁ in the connection region 702 and the first superconducting bit i₂.

In some optional embodiments, a reset operation may be sequentially performed on the first suspended superconducting bit j₂ and the first suspended superconducting bit j₁.

For example, when the reset operation is performed on the first suspended superconducting bit j₂, in a possible manner, the first central exchange region 701 may be isolated, and the reset operation is performed on the first suspended superconducting bit j₂ in the first central exchange region 701.

For example, for a manner of isolating the first central exchange region 701, refer to the foregoing description. Details are not described again. After the first central exchange region 701 is isolated, as shown in FIG. 9, the control circuit may search out a high-fidelity pulse waveform #4, and send the pulse waveform #4 to the superconducting quantum chip, to implement the reset operation on the first suspended superconducting bit j₂ in the first central exchange region 701.

For example, when the reset operation is performed on the first suspended superconducting bit j₁, in a possible manner, the connection region 705 may be isolated, and the reset operation is performed on the first suspended superconducting bit j₁ in the connection region 705.

For example, for a manner of isolating the connection region 705, refer to the foregoing description. Details are not described again. After the connection region 705 is isolated, as shown in FIG. 9, the control circuit may search out a high-fidelity pulse waveform #5, and send the pulse waveform #5 to the superconducting quantum chip, to implement the reset operation on the first suspended superconducting bit j₁ in the first connection region 705.

Optionally, in the first implementation, a quantity of superconducting bits included in each connection region is less than or equal to N, and a quantity of connection regions associated with the first central exchange region is less than or equal to (N-1), where N represents a maximum dimension, of a quantum system, solved by a valid value, and N is a positive integer. Herein, the quantity of connection regions associated with the first central exchange region is a quantity of first suspended superconducting bits included in the first central exchange region, so that a total quantity of superconducting bits included in the first central exchange region is less than or equal to N.

Therefore, in this application, the quantity of superconducting bits included in each connection region is less than or equal to the maximum dimension, of the quantum system, solved by using the valid value, and the quantity of superconducting bits included in the first central exchange region is less than or equal to the maximum dimension, of the quantum system, solved by using the valid value, so that quantum operations inside the connection region and inside the first central exchange region can solve pulse waveforms by using the numerical optimization method, thereby helping implement various quantum manipulations required for implementing general quantum computing on a large-scale superconducting quantum computing chip.

In a specific example, in an existing commercial quantum computer, N may be 13. In this case, 12 connection regions may be used, and each connection region may have 13 bits. In this case, a superconducting quantum chip with a two-dimensional structure can accommodate a maximum of (13*12+1)=157 superconducting bits. In an example, in this case, the superconducting quantum chip that includes four connection regions and that is shown in FIG. 7 includes (13*4+1)=53 superconducting bits.

### Second implementation

In this implementation, the first suspended superconducting bits in the at least two connection regions may also be a same superconducting bit. In this case, the first suspended superconducting bit in the first central exchange region is coupled to at least one first superconducting bit in each connection region. In other words, in this implementation, the first central exchange region includes only one suspended superconducting bit, and the suspended superconducting bit is also a first suspended superconducting bit corresponding to each connection region. In other words, a first suspended superconducting bit included in at least one connection region associated with the first central exchange region is a same first suspended superconducting bit. In some possible descriptions, the first suspended superconducting bit may also be referred to as a central superconducting bit.

FIG. 10 shows an example of a first central exchange region and at least two connection regions in this implementation. As shown in FIG. 10, the superconducting quantum chip 620 includes a first central exchange region 1001 and four connection regions. The first central exchange region 1001 includes one first central suspended superconducting bit, and the first central suspended superconducting bit is also a first suspended superconducting bit in each connection region, that is, is coupled to at least one first superconducting bit in each connection region. As an example, the connection region 1002 in FIG. 10 is marked. As shown in FIG. 10, a first suspended superconducting bit in the connection region 1002 is a first central superconducting bit in the first central exchange region 1001, and is also coupled to at least one first superconducting bit in another connection region.

It should be noted that FIG. 10 is described only by using an example in which the first central superconducting bit in the first central exchange region is coupled to first superconducting bits in the four connection regions. However, this embodiment of this application is not limited thereto. For example, the first central superconducting bit may be coupled to more or fewer first superconducting bits in, for example, three or five connection regions.

In addition, for the coupling manner between the first suspended superconducting bit in each connection region and the at least one first superconducting bit in FIG. 10, and the coupling manner between the at least two first superconducting bits, refer to the description of the connection region 621 in FIG. 6. Details are not described again.

Still refer to FIG. 10. When the control circuit is configured to control a coupling strength between the first suspended superconducting bit in the connection region and a first superconducting bit in another connection region to be less than a first preset value, that is, when coupling between the first suspended superconducting bit and the first superconducting bit in the another connection region is disconnected, the connection region may be isolated, thereby obtaining a divided subspace. For example, when the control circuit is configured to control a coupling strength between the first suspended superconducting bit in the connection region 1002 and a first superconducting bit in a connection region other than the connection region 1002 to be less than a first preset value, the connection region 1002 may be isolated. A manner of isolating another connection region is similar to the manner of isolating the connection region 1002, and details are not described again.

When the control circuit is configured to control coupling between a first suspended superconducting bit in each connection region and a first superconducting bit coupled to the first suspended superconducting bit in the connection region, the first central exchange region may be isolated, thereby obtaining a divided subspace.

Therefore, in this embodiment of this application, a single connection region or a central exchange region can be isolated on the superconducting quantum chip by controlling the coupling strength between the first suspended superconducting bit and the first superconducting bit. Therefore, in this embodiment of this application, only a few adjustable coupling manners are required for the superconducting quantum chip, to effectively obtain the divided subspace, thereby helping simplify a chip process requirement.

In a chip structure shown in FIG. 10, a quantum manipulation may be performed on superconducting bits on the superconducting quantum chip for a single block (for example, the single connection region or the central exchange region) or for different blocks. The following separately describes manipulation manners in two cases.

Case 1: For a quantum manipulation inside the single connection region or the central exchange region, a pulse waveform may be used to implement the quantum manipulation on a superconducting bit inside a corresponding subspace.

For example, a coupling strength between a suspended superconducting bit and a surrounding superconducting bit may first be adjusted, so that a target manipulation region may be considered as a small independent subspace. Then, inside the independent subspace, a pulse waveform for implementing the quantum manipulation on the superconducting bit in the subspace may be obtained by using the numerical optimization technology.

In some optional embodiments, when the at least two connection regions include a fourth connection region, for a quantum manipulation on a superconducting bit in the fourth connection region, the control circuit is further configured to: control a coupling strength between the first suspended superconducting bit and a first superconducting bit coupled to the first superconducting bit in a connection region other than the fourth connection region in the at least two connection regions to be less than a first preset value, and send an eighth pulse waveform, where the eighth pulse waveform is used to perform a quantum operation on a superconducting bit in the fourth connection region. Herein, the superconducting bit in the fourth connection region includes a first superconducting bit and the first suspended superconducting bit in the fourth connection region.

When the control circuit controls the coupling strength between the first suspended superconducting bit and the first superconducting bit coupled to the first superconducting bit in the connection region other than the fourth connection region to be less than the first preset value, so that coupling between the first suspended superconducting bit and the first superconducting bit in the connection region other than the fourth connection region can be disconnected, and the fourth connection region may be considered as an isolated subsystem. Then, a high-fidelity eighth pulse waveform may be found in the fourth connection region by using the numerical optimization technology, to implement a single-bit quantum operation, a two-bit quantum operation, or a multi-bit quantum operation on the superconducting bit in the fourth connection region.

Therefore, in this embodiment of this application, the coupling strength between the first suspended superconducting bit and the first superconducting bit in the connection region other than the fourth connection region is controlled to be less than the first preset value, so that the fourth connection region can be isolated on the superconducting quantum chip. Inside the fourth connection region, any single-bit or multi-bit logic gate operation may be implemented by using the numerical optimization technology. Therefore, in this embodiment of this application, various quantum operations required for general quantum computing can be implemented on a large-scale superconducting quantum chip.

In some optional embodiments, for a quantum manipulation on a superconducting quantum bit in the first central exchange region, the control circuit is further configured to: control a coupling strength between the first suspended superconducting bit and a first superconducting bit coupled to the first suspended superconducting bit to be less than a first preset value, and send a ninth pulse waveform, where the ninth pulse waveform is used to perform a single-bit quantum operation on the first suspended superconducting bit.

When the control circuit controls the coupling strength between the first suspended superconducting bit and the first superconducting bit coupled to the first suspended superconducting bit to be less than the first preset value, the coupling strength between the first suspended superconducting bit and the first superconducting bit in each connection region can be close to 0, so that coupling between the first suspended superconducting bit and the first superconducting bit in each connection region is disconnected, and the first central exchange region may be considered as an isolated subsystem. Then, a high-fidelity ninth pulse waveform may be found in the first central exchange region by using the numerical optimization technology, to implement a single-bit quantum operation on the superconducting bit in the first central exchange region.

Therefore, in this embodiment of this application, the coupling strength between the first suspended superconducting bit in the central exchange region and the first superconducting bit, in each connection region, coupled to the first suspended superconducting bit is controlled to be less than the first preset value, so that the central exchange region can be isolated on the superconducting quantum chip. Inside the central exchange region, any single-bit logic gate operation may be implemented by using the numerical optimization technology. Therefore, in this embodiment of this application, various quantum operations required for general quantum computing can be implemented on a large-scale superconducting quantum chip.

Case 2: For a quantum manipulation between different connection regions, a plurality of pulse waveforms may be used to implement the quantum manipulation on superconducting bits between different connection regions.

In some optional embodiments, when the at least two connection regions include a fifth connection region and a sixth connection region, for a quantum manipulation between superconducting bits in the fifth and sixth connected regions, the control circuit may be configured to: control a coupling strength between the first suspended superconducting bit and a first superconducting bit coupled to the first superconducting bit in a connection region other than the fifth connection region in the at least two connection regions to be less than a first preset value, so that the coupling strength between the first suspended superconducting bit and the first superconducting bit in the connection region other than the fifth connection region is close to 0; control a coupling strength between the first suspended superconducting bit and a first superconducting bit coupled to the first suspended superconducting bit in the fifth connection region to be greater than a second preset value; and send a tenth pulse waveform to the superconducting quantum chip, where the tenth pulse waveform is used to perform a two-bit operation on one first superconducting bit (that is, a third target superconducting bit) in the fifth connection region and the first suspended superconducting bit.

When the control circuit controls that the coupling strength between the first suspended superconducting bit and the first superconducting bit coupled to the first suspended superconducting bit in the connection region other than the fifth connection region is less than the first preset value, the fifth connection region may be considered as an isolated subsystem. Then, a high-fidelity tenth pulse waveform may be found in the fifth connection region by using the numerical optimization technology, to implement a two-bit quantum operation on the third target superconducting bit and the first suspended superconducting bit.

The control circuit is further configured to: control a coupling strength between the first suspended superconducting bit and a first superconducting bit coupled to the first superconducting bit in a connection region other than the sixth connection region in the at least two connection regions to be less than a first preset value and a coupling strength between the first suspended superconducting bit and a first superconducting bit coupled to the first suspended superconducting bit in the sixth connection region to be greater than a second preset value, and send an eleventh pulse waveform to the superconducting quantum chip, where the eleventh pulse waveform is used to perform a two-bit operation on one first superconducting bit (that is, a fourth target superconducting bit) in the sixth connection region and the first suspended superconducting bit.

When the control circuit controls that the coupling strength between the first suspended superconducting bit and the first superconducting bit coupled to the first suspended superconducting bit in the connection region other than the sixth connection region is less than the first preset value, the sixth connection region may be considered as an isolated subsystem. Then, a high-fidelity eleventh pulse waveform may be found in the sixth connection region by using the numerical optimization technology, to implement a two-bit operation on the fourth target superconducting bit and the first suspended superconducting bit.

Therefore, in this embodiment of this application, transition is performed on the two-bit gate operation between the superconducting bits in the two different connection regions by using the central exchange region, so that a two-bit gate operation between superconducting bits in any two connection regions associated with the central exchange region can be implemented, thereby helping implement various quantum operations required for general quantum computing on a large-scale superconducting quantum chip.

Optionally, the control circuit is further configured to: control the coupling strength between the first suspended superconducting bit and the first superconducting bit coupled to the first superconducting bit in the connection region other than the fifth connection region in the at least two connection regions to be less than the first preset value; control the coupling strength between the first suspended superconducting bit and the first superconducting bit coupled to the first suspended superconducting bit in the fifth connection region to be greater than the second preset value; and send a twelfth pulse waveform to the superconducting quantum chip, where the twelfth pulse waveform is used to perform a reset operation on the first suspended superconducting bit.

When the control circuit controls that the coupling strength between the first suspended superconducting bit and the first superconducting bit coupled to the first suspended superconducting bit in the connection region other than the fifth connection region is less than the first preset value, the fifth connection region may be considered as an isolated subsystem. Then, a high-fidelity twelfth pulse waveform may be found in the fifth connection region by using the numerical optimization technology, to implement a two-bit quantum operation on the first suspended superconducting bit.

Therefore, in this embodiment of this application, a single connection region or a central exchange region is isolated, to implement a reset operation on a first suspended superconducting bit used for transiting a quantum operation between superconducting bits in different connection regions, so that a quantum state of the first suspended superconducting bit can be restored, thereby avoiding impact on another superconducting bit when the quantum operation between the superconducting bits in the different connection regions is performed.

A specific example of a quantum manipulation between different connection regions is described below with reference to FIG. 11 and FIG. 12.

In the examples in FIG. 11 and FIG. 12, a two-bit CNOT gate operation needs to be performed on a first superconducting bit i₃ in the connection region 1002 and a first superconducting bit i₄ in the connection region 1003. As shown in FIG. 12, a two-bit gate operation may be split into three two-bit CNOT gate operations in a same region block, and the two-bit CNOT gate operation between the two first superconducting bits i₃ and i₄ may be transferred by using a first suspended superconducting bit j. Specific manipulation steps may be as follows:
First, the control circuit may control a coupling strength between the first suspended superconducting bit j and a first superconducting bit coupled to the first suspended superconducting bit j in a connection region other than the connection region 1002 in the at least two connection regions in FIG. 11 to be less than a first preset value, so that the coupling strength is approximately 0, and control a coupling strength between the first suspended superconducting bit j and a first superconducting bit coupled to the first superconducting bit j in the connecting region 1002 to be greater than a second preset value, thereby isolating the connecting region 1002. In this case, as shown in (a) in FIG. 11 and FIG. 12, the control circuit may search out a high-fidelity pulse waveform #6, and send the pulse waveform #6 to the superconducting quantum chip, to implement the two-bit CNOT gate operation on the first superconducting bit i₃ and the first suspended superconducting bit j in the connection region 1002.

Then, the control circuit may control a coupling strength between the first suspended superconducting bit j and a first superconducting bit coupled to the first suspended superconducting bit j in a connection region other than the connection region 1003 in the at least two connection regions in FIG. 11 to be less than a first preset value, so that the coupling strength is approximately 0, and control a coupling strength between the first suspended superconducting bit j and a first superconducting bit coupled to the first superconducting bit j in the connecting region 1003 to be greater than a second preset value, thereby isolating the connecting region 1003. In this case, as shown in (b) in FIG. 11 and FIG. 12, the control circuit may search out a high-fidelity pulse waveform #7, and send the pulse waveform #7 to the superconducting quantum chip, to implement the two-bit CNOT gate operation on the first suspended superconducting bit j and the first superconducting bit i₄ in the connection region 1003.

In some optional embodiments, a reset operation may be performed on the first suspended superconducting bit j.

For example, when the reset operation is performed on the first suspended superconducting bit j, in a possible manner, the connection region 1002 may be isolated, and the reset operation is performed on the first suspended superconducting bit j.

For example, for a manner of isolating the connection region 1002, refer to the foregoing description. Details are not described again. After the connection region 1002 is isolated, as shown in FIG. 12, the control circuit may search out a high-fidelity pulse waveform #8, and send the pulse waveform #8 to the superconducting quantum chip, to implement the reset operation on the first suspended superconducting bit j.

Optionally, in the second implementation, a quantity of superconducting bits included in each connection region is less than or equal to N, where N represents a maximum dimension, of a quantum system, solved by a valid value, and N is a positive integer.

Therefore, in this application, the quantity of superconducting bits included in each connection region is enabled to be less than or equal to the maximum dimension, of the quantum system, solved by the valid numerical value, so that a pulse waveform can be solved for a quantum operation in the connection region by using a numerical optimization method, thereby helping implement various quantum manipulations required for implementing general quantum computing on a large-scale superconducting quantum computing chip.

It should be noted that, because the first central exchange region includes only one central superconducting bit, a quantity of connection regions associated with the first central exchange region does not affect a quantity of superconducting bits included in the first central exchange region. Therefore, in this case, the quantity of connection regions associated with the first central exchange region is not limited herein.

In a specific example, in an existing commercial quantum computer, N may be 13. In this case, the superconducting quantum chip including four connection regions shown in FIG. 7 includes (13*4+1)=53 superconducting bits. In addition, if a space limitation of the quantum superconducting chip is not considered, in this structure, any plurality of connection regions may be suspended in the first central exchange region, so that any plurality of superconducting bits can be accommodated.

In some optional embodiments, there may be at least two first central exchange regions. In this case, the superconducting quantum chip may further include a second central exchange region, the second central exchange region includes at least two second suspended superconducting bits and one second central superconducting bit, the at least two second suspended superconducting bits are in a one-to-one correspondence with the at least two first central exchange regions, the second central superconducting bit is coupled to each second suspended superconducting bit, and each second suspended superconducting bit is coupled to at least one superconducting bit in a first central exchange region corresponding to each second suspended superconducting bit.

The control circuit may be further configured to control a coupling strength between the second central superconducting bit and each second suspended superconducting bit and a coupling strength between each second suspended superconducting bit and the superconducting bit in the first central exchange region. In other words, in this embodiment of this application, coupling between the second central superconducting bit and the second suspended superconducting bit is adjustable, and coupling between the second suspended superconducting bit and a superconducting bit coupled to the second suspended superconducting bit in the first central exchange region is adjustable.

As an example, for the first central exchange region shown in FIG. 7, each second suspended superconducting bit is coupled to a first central superconducting bit in a first central exchange region corresponding to the second suspended superconducting bit. For the first central exchange region shown in FIG. 10, each second suspended superconducting bit is coupled to a first suspended superconducting bit/a first central superconducting bit in the first central exchange region corresponding to the second suspended superconducting bit.

In other words, the superconducting quantum chip with the two-dimensional structure shown in FIG. 7 or FIG. 10 may be used as a basis. One second suspended superconducting bit may be led out from each of at least two first central superconducting bits in the two-dimensional structure (that is, each first central superconducting bit is coupled to the one second suspended superconducting bit), and the at least two second suspended superconducting bits each are coupled to the second central superconducting bit, to form a superconducting quantum chip with a three-dimensional structure, that is, the superconducting quantum chip with the three-dimensional structure may couple (or connect) a plurality of two-dimensional structures together. In this case, the at least two second suspended superconducting bits and the second central superconducting bit form the second central exchange region.

In the superconducting quantum chip with the three-dimensional structure, the first central superconducting bit may also be referred to as a level-1 central superconducting bit, the first suspended superconducting bit may also be referred to as a level-1 suspended superconducting bit, the first central exchange region may also be referred to as a level-1 central exchange region, the second central superconducting bit may also be referred to as a level-2 central superconducting bit, the second suspended superconducting bit may also be referred to as a level-2 suspended superconducting bit, and the second central exchange region may also be referred to as a level-2 central exchange region. This is not limited in this embodiment of this application.

FIG. 13 shows an example of a superconducting quantum chip. As shown in FIG. 13, the chip includes four first central exchange regions, each first central exchange region includes a first central superconducting bit and four first suspended superconducting bits, and the first central superconducting bit is coupled to each first central suspended superconducting bit. Each first suspended superconducting bit is coupled to at least one first superconducting bit in a connection region in which the first suspended superconducting bit is located, and each connection region includes seven first superconducting bits. Specifically, for a coupling manner between each first central superconducting bit and the first suspended superconducting bit and a coupling manner between the first suspended superconducting bit and the first superconducting bit, refer to the foregoing description.

Further, in FIG. 13, a second central exchange region is further included. The second central exchange region includes one second central superconducting bit and four second suspended superconducting bits, and each second suspended superconducting bit is coupled to a first central superconducting bit in one first central exchange region.

It should be noted that, in the three-dimensional structure shown in FIG. 13, requirements on quantities and connectivity of the second suspended superconducting bit and the second central superconducting bit are the same as those in the foregoing two-dimensional structure, and details are not described again. The three-dimensional structure may also include more than or less than four first central exchange regions. In addition, there may be another central exchange region, where the central exchange region includes one central superconducting bit and a plurality of suspended superconducting bits, and each suspended superconducting bit herein is coupled to a second central superconducting bit in one second central exchange region. By analogy, a structure of more dimensions may be formed. This is not limited in this application.

In another possible embodiment, the first central exchange region in FIG. 13 may further include only one first central superconducting bit. In this case, the first central superconducting bit is coupled to the second suspended superconducting bit in the second central exchange region.

For a superconducting chip whose second central exchange region includes at least two second suspended superconducting bits and one second central superconducting bit, a quantum manipulation may be performed on superconducting bits on the superconducting quantum chip for same two-dimensional structure or for different two-dimensional structures. The following separately describes manipulation manners in two cases.

Case 1: For a quantum manipulation of a superconducting bit in a same two-dimensional structure, a coupling strength between a second suspended superconducting bit and a superconducting bit coupled to the second suspended superconducting bit may be adjusted, so that a two-dimensional structure in which a to-be-manipulated target superconducting bit is located is isolated into an independent two-dimensional system. Then, the foregoing manner of manipulating the superconducting chip in the two-dimensional structure may be used to implement the quantum manipulation on the target superconducting bit in the isolated two-dimensional system.

In some optional embodiments, as shown in FIG. 14A, when a single-bit quantum operation or a multi-bit quantum operation needs to be performed in a two-dimensional structure 1401 in the three-dimensional structure, the control circuit may be configured to control a coupling strength between the second suspended superconducting bit and a first central superconducting bit in a first central exchange region in the two-dimensional structure 1401 to be less than a first preset value, that is, approximately 0, so that the two-dimensional structure 1401 may be considered as an isolated subsystem. After the two-dimensional structure 1401 is isolated into the subsystem, a single-bit quantum operation or a multi-bit quantum operation may be performed on the superconducting bit in the two-dimensional structure 1401 in the manner described above.

In some optional embodiments, as shown in FIG. 14B, when a single-bit quantum operation or a multi-bit quantum operation needs to be performed in the second central exchange region in the three-dimensional structure, the control circuit may be configured to control coupling strengths between all second suspended superconducting bits in the second central exchange region and a first central superconducting bit coupled to each first suspended superconducting bit in each first central exchange region to be less than a first preset value, that is, close to 0, so that the second central exchange region may be considered as an isolated subsystem. After the second central exchange region is isolated into the subsystem, a single-bit quantum operation or a multi-bit quantum operation may be performed on the superconducting bit in the second central exchange region in the manner described above.

In some optional embodiments, as shown in FIG. 14C, when a multi-bit operation needs to be performed in one first central exchange region in the three-dimensional structure and a region corresponding to a second suspended superconducting bit corresponding to the first central exchange region, the control circuit may control the coupling strength between the second suspended superconducting bit and the second central superconducting bit in the second central exchange region to be less than a first preset threshold, that is, close to 0, so that a whole of the first central exchange region and the second suspended superconducting bit corresponding to the first central exchange region may be considered as an isolated two-dimensional subsystem. After the whole of the first central exchange region and the second suspended superconducting bit corresponding to the first central exchange region is completely isolated into the subsystem, a multi-bit quantum operation may be performed on the superconducting bit in the isolated subsystem in the manner described above.

It should be noted that, in FIG. 14A to FIG. 14C, a dashed line connection between superconducting bits indicates that coupling between two superconducting bits connected by the dashed line is disabled, that is, a coupling strength between the superconducting bits is close to 0. A solid line connection between superconducting bits indicates that coupling between two superconducting bits connected by the solid line is enabled, the superconducting bits interact with each other.

Therefore, in this embodiment of this application, the coupling strength between the second suspended superconducting bit and the superconducting bit coupled to the second suspended superconducting bit can be controlled, so that the two-dimensional structure in which the to-be-manipulated target superconducting bit is located is isolated into the independent two-dimensional system. Inside the independent two-dimensional system, any single-bit logic gate operation or multi-bit logic gate operation may be implemented by using the numerical optimization technology. Therefore, in this embodiment of this application, various quantum operations required for general quantum computing can be implemented on a large-scale superconducting quantum chip.

Case 2: For a quantum manipulation of superconducting bits between different two-dimensional structures, a plurality of pulse waveforms may be used to implement quantum manipulation on the superconducting bits between the different two-dimensional structures.

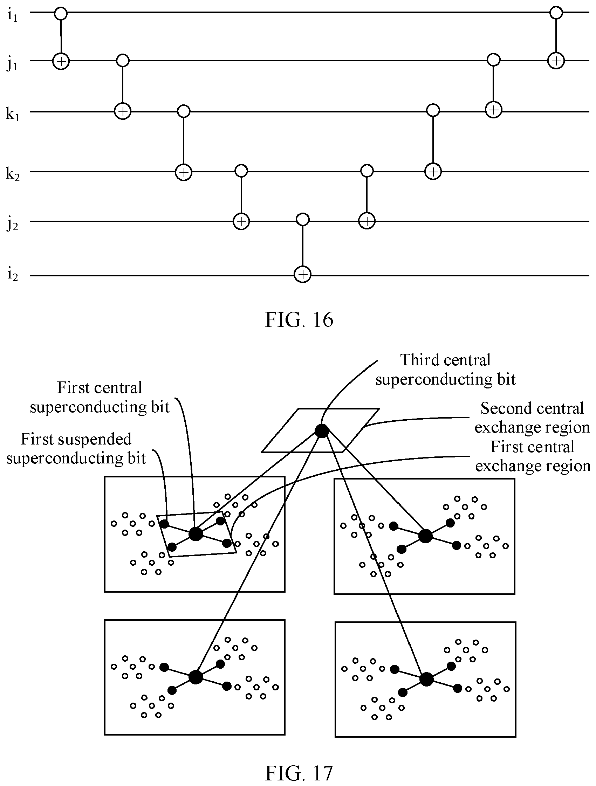

A specific example of a quantum manipulation between the superconducting bits of the different two-dimensional structures is described below with reference to FIG. 15 and FIG. 16.

In the examples in FIG. 15 and FIG. 16, a two-bit CNOT gate operation needs to be performed on a first superconducting bit i₁ in a first two-dimensional region 1501 and a first superconducting bit i₂ in a second two-dimensional region 1502. As shown in FIG. 16, a two-bit gate operation may be split into nine two-bit CNOT gate operations in a same two-dimensional structure, and the two-bit CNOT gate operation between the different two-dimensional structures may be transferred by using the second suspended superconducting bit in the second central exchange region. Specific manipulation steps may be as follows:
First, as shown in (a) in FIG. 15 and FIG. 16, the control circuit may be used to isolate the two-dimensional structure 1501 and search out a high-fidelity pulse waveform #9, to implement the two-bit CNOT gate operation on the first superconducting bit i₁ and the first suspended superconducting bit j₁ in the two-dimensional structure 1501. Specifically, for a manner of the isolated two-dimensional structure 1501, refer to the foregoing description in FIG. 14A. Details are not described again.

Then, as shown in (b) in FIG. 15 and FIG. 16, the control circuit may be used to isolate a whole of a first central exchange region in the two-dimensional structure 1501 and a second suspended superconducting bit k₁ corresponding to the first central exchange region, and search out a high-fidelity pulse waveform #10, to implement the two-bit CNOT gate operation on the first suspended superconducting bit j₁ and the second suspended superconducting bit k₁ in the whole of the first central exchange region in the two-dimensional structure 1501 and the second suspended superconducting bit k₁ corresponding to the first central exchange region. Specifically, for a manner of isolating the whole of the first central exchange region in the two-dimensional structure 1501 and the second suspended superconducting bit k₁ corresponding to the first central exchange region, refer to the foregoing description in FIG. 14C. Details are not described again.

Then, as shown in (c) in FIG. 15 and FIG. 16, the control circuit may be used to isolate a second central exchange region, and search out a high-fidelity pulse waveform #11, to implement the two-bit CNOT gate operation on the second suspended superconducting bit k₁ and the second suspended superconducting bit k₂ in the second central exchange region. Specifically, for a manner of isolating the second central exchange region, refer to the foregoing description in FIG. 14B. Details are not described again.

Then, as shown in (d) in FIG. 15 and FIG. 16, the control circuit may be used to isolate a whole of a first central exchange region in the two-dimensional structure 1502 and a second suspended superconducting bit k₂ corresponding to the first central exchange region, and search out a high-fidelity pulse waveform #12, to implement the two-bit CNOT gate operation on the first suspended superconducting bit j₂ and the second suspended superconducting bit k₂ in the whole of the first central exchange region in the two-dimensional structure 1502 and the second suspended superconducting bit k₂ corresponding to the first central exchange region. Specifically, for a manner of isolating the whole of the first central exchange region in the two-dimensional structure 1502 and the second suspended superconducting bit k₂ corresponding to the first central exchange region, refer to the foregoing description in FIG. 14C. Details are not described again.

Then, as shown in (e) in FIG. 15 and FIG. 16, the control circuit may be used to isolate the two-dimensional structure 1502 and search out a high-fidelity pulse waveform #13, to implement the two-bit CNOT gate operation on the first superconducting bit i₂ and the first suspended superconducting bit j₂ in the two-dimensional structure 1502. Specifically, for a manner of the isolated two-dimensional structure 1502, refer to the foregoing description in FIG. 14A. Details are not described again.

Therefore, in this embodiment of this application, transition is performed on the two-bit gate operation between the superconducting bits in the two different two-dimensional structures by using the central exchange region, so that a two-bit gate operation between superconducting bits in any two two-dimensional structures associated with the central exchange region can be implemented, thereby helping implement various quantum operations required for general quantum computing on a large-scale superconducting quantum chip.

In some optional embodiments, a reset operation may be sequentially performed on the first suspended superconducting bit j₂, the second suspended superconducting bit k₂, the second suspended superconducting bit k₁, and the first suspended superconducting bit j₁.

For example, when the reset operation is performed on the first suspended superconducting bit j₂, in a possible manner, a whole of the first central exchange region in the two-dimensional structure 1502 and the second suspended superconducting bit k₂ corresponding to the first central exchange region may be isolated, and the reset operation is performed on the first suspended superconducting bit j₂ in the whole. This is not limited in this embodiment of this application.

For example, when the reset operation is performed on the second suspended superconducting bit k₂, in a possible manner, a second central exchange region may be isolated, and the reset operation is performed on the second suspended superconducting bit k₂.

For example, for a manner of isolating the second central exchange region, refer to the foregoing description. Details are not described again. After the second central exchange region is isolated, the reset operation may be performed on the second suspended superconducting bit k₂ in the second central exchange region in the manner described above. As shown in FIG. 16, the control circuit may search out a high-fidelity pulse waveform #14, and send the pulse waveform #14 to the superconducting quantum chip, to implement the reset operation on the second suspended superconducting bit k₂.

As an example, a manner of performing the reset operation on the first suspended superconducting bit j₁ is similar to a manner of performing the reset operation on the first suspended superconducting bit j₂. For details, refer to the description of performing the reset operation on the first suspended superconducting bit j₂. Details are not described again.

Therefore, in this embodiment of this application, a subsystem including a single two-dimensional structure and a second suspended bit connected to the single two-dimensional structure is isolated, or the second central exchange region is isolated, to implement the reset operation on the first suspended superconducting bit and/or the second suspended superconducting bit that are/is used to transit a quantum operation between superconducting bits in different two-dimensional structures, so that quantum states/a quantum state of the first suspended superconducting bit and/or the second suspended superconducting bit can be restored, thereby helping avoid impact of the quantum operation between the superconducting bits in the different two-dimensional structures on another superconducting bit.

In some optional embodiments, there are at least two first central exchange regions. In this case, the superconducting quantum chip may further include a third central exchange region, where the third central exchange region includes one third central superconducting bit, and the third central superconducting bit is coupled to at least one superconducting bit in each first central exchange region.

The control circuit is further configured to control a coupling strength between the third central superconducting bit and the superconducting bit in each first central exchange region. In other words, in this embodiment of this application, coupling between the third central superconducting bit and the superconducting bit in the first central superconducting bit is adjustable.

As an example, for the first central exchange region shown in FIG. 7, the third central superconducting bit is coupled to a first central superconducting bit in each first central exchange region. For the first central exchange region shown in FIG. 10, the third central superconducting bit is coupled to a first suspended superconducting bit/the first central superconducting bit in each first central exchange region.

In other words, the superconducting quantum chip with the two-dimensional structure shown in FIG. 7 or FIG. 10 may be used as a basis. One third central superconducting bit may be led out from each of at least two first central superconducting bits in the two-dimensional structure, to form a superconducting quantum chip with a three-dimensional structure, that is, the superconducting quantum chip with the three-dimensional structure may couple (or connect) a plurality of two-dimensional structures together. In this case, the third central superconducting bit form the second central exchange region.

In some possible descriptions, it may also be considered that the third central superconducting bit has functions of both the second central superconducting bit and the second suspended superconducting bit. This is not limited in this embodiment of this application.

In the superconducting quantum chip with the three-dimensional structure, the first central superconducting bit may also be referred to as a level-1 central superconducting bit, the first suspended superconducting bit may also be referred to as a level-1 suspended superconducting bit, the first central exchange region may also be referred to as a level-1 central exchange region, the third central superconducting bit may also be referred to as a level-2 central superconducting bit, and the third central exchange region may also be referred to as a level-2 central exchange region. This is not limited in this embodiment of this application.

FIG. 17 shows an example of a superconducting quantum chip. As shown in FIG. 17, the chip includes four first central exchange regions. Specifically, for each first central superconducting bit, refer to descriptions in FIG. 13. Details are not described again.

Different from FIG. 13, in FIG. 17, the third central exchange region includes only one third central superconducting bit, and the third central superconducting bit is coupled to a first central suspended superconducting bit in each first central exchange region. In some embodiments, it may also be considered that the third central superconducting bit has both functions of a second suspended superconducting bit and a second central superconducting bit in a second central superconducting bit.

It should be noted that, in the three-dimensional structure shown in FIG. 17, a quantity of first central superconducting bits coupled to the third central superconducting bit is not limited.

In another possible embodiment, the first central exchange region in FIG. 17 may further include only one first central superconducting bit. In this case, the first central superconducting bit is coupled to the third central superconducting bit.

For a superconducting chip whose third central exchange region includes only the third central superconducting bit, a quantum manipulation may be performed on superconducting bits on the superconducting quantum chip for a same two-dimensional structure or for different two-dimensional structures. Specifically, for the quantum manipulation between the superconducting bits in the same two-dimensional structure or the different two-dimensional structures, refer to the foregoing description that the second central exchange region includes the at least two second suspended superconducting bits and the second central superconducting bit. Details are not described again.

For a superconducting chip that is with a three-dimensional structure including a plurality of second suspended superconducting bits and that is formed based on the two-dimensional structure, of the first central exchange region, including a plurality of first suspended superconducting bits, based on a capability that N may be 13 in an existing commercial quantum computer, the superconducting quantum chip with the three-dimensional structure may accommodate a maximum of (13*12+2)*12+1=1897 superconducting bits. For a superconducting chip that is with a three-dimensional structure and that is formed based on the two-dimensional structure, of the first central exchange region, including one central superconducting bit, or for a superconducting chip with a three-dimensional structure only including the second central superconducting bit in the second central exchange region, if a space limitation of the quantum superconducting chip is not considered, the structure may accommodate any plurality of superconducting bits.

In some optional embodiments, similar to the level-1 central superconducting bit, the level-2 central superconducting bit (for example, the second central superconducting bit and the third central superconducting bit) may further lead out a higher-level suspended superconducting bit, and further extend the superconducting quantum chip with the three-dimensional structure to a superconducting quantum chip with a higher-dimensional structure. Similarly, each level of central superconducting bit may lead to a higher-level suspended superconducting bit, so that the chip structure provided in this application has a capability of being extended to a superconducting quantum chip with a higher-dimensional structure.

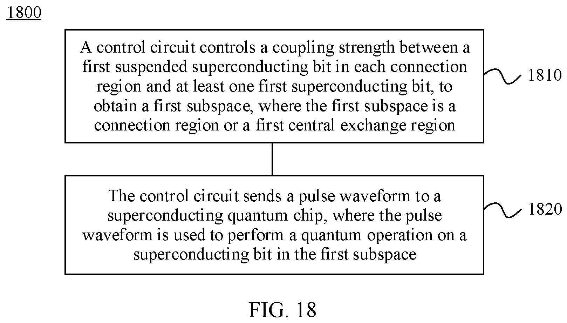

FIG. 18 is a schematic flowchart of a quantum bit manipulation method 1800 according to an embodiment of this application. The method 1800 may be applied to a superconducting quantum computing system, for example, the superconducting quantum computing system described in FIG. 6 to FIG. 17 above, and includes a control circuit and a superconducting quantum chip. The method 1800 may include steps 1810and 1820.

1810: The control circuit controls a coupling strength between a first suspended superconducting bit in each connection region and at least one first superconducting bit, to obtain a first subspace, where the first subspace is a connection region or a first central exchange region.

1820: The control circuit sends a pulse waveform to the superconducting quantum chip, where the pulse waveform is used to perform a quantum operation on a superconducting bit in the first subspace.

Optionally, that the control circuit controls a coupling strength between a first suspended superconducting bit in each connection region and at least one first superconducting bit, to obtain a first subspace includes:
The control circuit controls a coupling strength between a first suspended superconducting bit in a first connection region and the first central superconducting bit to be less than a first preset value, to obtain the first subspace, where the first subspace is the first connection region.

That the control circuit sends a pulse waveform to the superconducting quantum chip, where the pulse waveform is used to perform a quantum operation on a superconducting bit in the first subspace includes:
The control circuit sends a first pulse waveform to the superconducting quantum chip, where the first pulse waveform is used to perform a quantum operation on a superconducting bit in the first connection region.

Optionally, that the control circuit controls a coupling strength between a first suspended superconducting bit in each connection region and at least one first superconducting bit, to obtain a first subspace includes:
The control circuit controls a coupling strength between the first suspended superconducting bit in each connection region and a first superconducting bit coupled to the first suspended superconducting bit to be less than the first preset value, to obtain the first subspace, where the first subspace is the first central exchange region.

That the control circuit sends a pulse waveform to the superconducting quantum chip, where the pulse waveform is used to perform a quantum operation on a superconducting bit in the first subspace includes:
The control circuit sends a second pulse waveform to the superconducting quantum chip, where the second pulse waveform is used to perform a quantum operation on a superconducting bit in the first central exchange region.

Optionally, the at least two connection regions include a second connection region and a third connection region, and the method 1800 further includes:
The control circuit controls a coupling strength between a first suspended superconducting bit in the second connection region and the first central superconducting bit to be less than a first preset value, controls a coupling strength between the first suspended superconducting bit in the second connection region and a first superconducting bit coupled to the first suspended superconducting bit to be greater than a second preset value, and sends a third pulse waveform to the superconducting quantum chip, where the third pulse waveform is used to perform a two-bit operation on one first superconducting bit in the second connection region and the first suspended superconducting bit in the second connection region;
controls the coupling strength between the first suspended superconducting bit in the second connection region and the first central superconducting bit to be greater than the second preset value, a coupling strength between a first suspended superconducting bit in the third connection region and the first central superconducting bit to be greater than the second preset value, and a coupling strength between the first suspended superconducting bit in each connection region and a first superconducting bit coupled to the first suspended superconducting bit to be less than the first preset value, and sends a fourth pulse waveform to the superconducting quantum chip, where the fourth pulse waveform is used to perform a two-bit operation on the first suspended superconducting bit in the second connection region and the first suspended superconducting bit in the third connection region in the first central exchange region; and
controls a coupling strength between the first suspended superconducting bit in the third connection region and a first superconducting bit coupled to the first suspended superconducting bit to be greater than the second preset value and the coupling strength between the first suspended superconducting bit in the third connection region and the first central superconducting bit to be less than the first preset value, and sending a fifth pulse waveform to the superconducting quantum chip, where the fifth pulse waveform is used to perform a two-bit operation on one first superconducting bit in the third connection region and the first suspended superconducting bit in the third connection region.

Optionally, the method 1800 further includes:
The control circuit controls the coupling strength between the first suspended superconducting bit in the third connection region and the first central superconducting bit to be greater than the second preset value, controls the coupling strength between the first suspended superconducting bit in each connection region and the first superconducting bit coupled to the first suspended superconducting bit to be less than the first preset value, and sends a sixth pulse waveform to the superconducting quantum chip, where the sixth pulse waveform is used to perform a reset operation on the first suspended superconducting bit in the third connection region in the first central exchange region; and
controls the coupling strength between the first suspended superconducting bit in the second connection region and the first superconducting bit coupled to the first suspended superconducting bit in the second connection region to be greater than the second preset value, controls the coupling strength between the first suspended superconducting bit in the second connection region and the first central superconducting bit to be less than the first preset value, and sends a seventh pulse waveform to the superconducting quantum chip, where the seventh pulse waveform is used to perform a reset operation on the first suspended superconducting bit in the second connection region.

Optionally, the at least two connection regions include a fourth connection region, and that the control circuit controls a coupling strength between a first suspended superconducting bit in each connection region and at least one first superconducting bit, to obtain a first subspace includes:
The control circuit controls a coupling strength between the first suspended superconducting bit and a first superconducting bit coupled to the first superconducting bit in a connection region other than the fourth connection region in the at least two connection regions to be less than a first preset value, to the first subspace, where the first subspace is the fourth connection region.

That the control circuit sends a pulse waveform to the superconducting quantum chip, where the pulse waveform is used to perform a quantum operation on a superconducting bit in the first subspace includes:
The control circuit sends an eighth pulse waveform to the superconducting quantum chip, where the eighth pulse waveform is used to perform a quantum operation on a superconducting bit in the fourth connection region.

Optionally, that the control circuit controls a coupling strength between a first suspended superconducting bit in each connection region and at least one first superconducting bit, to obtain a first subspace includes:
The control circuit controls a coupling strength between the first suspended superconducting bit and a first superconducting bit coupled to the first suspended superconducting bit to be less than a first preset value, to obtain the first subspace, where the first subspace is the first central exchange region.

That the control circuit sends a pulse waveform to the superconducting quantum chip, where the pulse waveform is used to perform a quantum operation on a superconducting bit in the first subspace includes:
The control circuit sends a ninth pulse waveform to the superconducting quantum chip, where the ninth pulse waveform is used to perform a single-bit quantum operation on the first suspended superconducting bit.

Optionally, the at least two connection regions include a fifth connection region and a six connection region, and the method 1800 further includes:
The control circuit controls a coupling strength between the first suspended superconducting bit and a first superconducting bit coupled to the first superconducting bit in a connection region other than the fifth connection region in the at least two connection regions to be less than a first preset value and a coupling strength between the first suspended superconducting bit and a first superconducting bit coupled to the first suspended superconducting bit in the fifth connection region to be greater than a second preset value, and sends a tenth pulse waveform to the superconducting quantum chip, where the tenth pulse waveform is used to perform a two-bit operation on one first superconducting bit in the fifth connection region and the first suspended superconducting bit; and
controls a coupling strength between the first suspended superconducting bit and a first superconducting bit coupled to the first superconducting bit in a connection region other than the sixth connection region in the at least two connection regions to be less than a first preset value and a coupling strength between the first suspended superconducting bit and a first superconducting bit coupled to the first suspended superconducting bit in the sixth connection region to be greater than a second preset value, and sends an eleventh pulse waveform to the superconducting quantum chip, where the eleventh pulse waveform is used to perform a two-bit operation on one first superconducting bit in the sixth connection region and the first suspended superconducting bit.

Optionally, the method 1800 further includes:
The control circuit controls the coupling strength between the first suspended superconducting bit and the first superconducting bit coupled to the first superconducting bit in the connection region other than the fifth connection region in the at least two connection regions to be less than the first preset value and the coupling strength between the first suspended superconducting bit and the first superconducting bit coupled to the first suspended superconducting bit in the fifth connection region to be greater than the second preset value, and sends a twelfth pulse waveform to the superconducting quantum chip, where the twelfth pulse waveform is used to perform a reset operation on the first suspended superconducting bit.

Optionally, the method 1800 further includes:
The control circuit controls a coupling strength between the second central superconducting bit and each second suspended superconducting bit and a coupling strength between each second suspended superconducting bit and the superconducting bit in the first central exchange region.

Optionally, the method 1800 further includes:
The control circuit controls a coupling strength between the third central superconducting bit and the superconducting bit in each first central exchange region.

It should be understood that the steps of the quantum bit manipulation method 1800 in FIG. 18 may be performed by the superconducting quantum computing system in this embodiment of this application. For a specific process, refer to the descriptions in the foregoing embodiment. Details are not described herein again.

An embodiment of this application further provides a superconducting quantum chip. The chip includes at least two connection regions and a first central exchange region.

Each connection region of the at least two connection regions includes a first suspended superconducting bit and at least one first superconducting bit, and the first suspended superconducting bit is coupled to the at least one first superconducting bit.

The first central exchange region includes the first suspended superconducting bit in each connection region, and is used to transfer a quantum operation between superconducting bits in different connection regions.

A coupling strength between the first suspended superconducting bit in each connection region and the at least one first superconducting bit is adjustable.

It should be understood that for the superconducting quantum chip, refer to the description in the foregoing embodiment. Details are not described herein again.

Embodiments in this application may be used independently, or may be used jointly. This is not limited herein.

It should be understood that in the foregoing embodiments, terms such as "first" and "second" are merely intended to distinguish different objects, and should not constitute any limitation on this application. For example, different superconducting bits, central exchange regions, and suspended superconducting bits are distinguished.

It should be further understood that the term "and/or" describes an association relationship between associated objects and represents that three relationships may exist. For example, A and/or B may represent the following three cases: Only A exists, both A and B exist, and only B exists. The character "/" generally indicates an "or" relationship between the associated objects. The term "at least one" means one or more. The term "at least one of A and B", similar to the term "A and/or B", describes an association relationship between the associated objects and represents that three relationships may exist. For example, at least one of A and B may represent the following three cases: Only A exists, both A and B exist, and only B exists.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

## Claims

1. A superconducting quantum computing system (600), comprising a control circuit (610) and a superconducting quantum chip (620), wherein the superconducting quantum chip (620) comprises at least two connection regions (621, 702, 703, 704, 705, 1002, 1003) and a first central exchange region (622, 701, 1001);
each connection region of the at least two connection regions (621, 702, 703, 704, 705, 1002, 1003) comprises a first suspended superconducting qubit and at least one first superconducting qubit, and the first suspended superconducting qubit is coupled to the at least one first superconducting qubit; and
the first central exchange region (622, 701, 1001) comprises the first suspended superconducting qubit in each connection region, and is used to transfer a quantum operation between a superconducting qubit in a first connection region and a superconducting qubit in a second connection region;
the superconducting quantum computing system (600) **characterised in that** the control circuit (610) is configured to control a coupling strength between the first suspended superconducting qubit in each connection region and the at least one first superconducting qubit.

2. The system (600) according to claim 1, wherein the first central exchange region (622, 701, 1001) further comprises one first central superconducting qubit, and the first central superconducting qubit is coupled to the first suspended superconducting qubit in each connection region; and
the control circuit (610) is further configured to control a coupling strength between the first central superconducting qubit and the first suspended superconducting qubit.

3. The system (600) according to claim 2, wherein the at least two connection regions (621, 702, 703, 704, 705, 1002, 1003) comprise a first connection region; and
the control circuit (610) is further configured to: control a coupling strength between a first suspended superconducting qubit in the first connection region and the first central superconducting qubit to be less than a first preset value, and send a first pulse waveform, wherein the first pulse waveform is used to perform a quantum operation on a superconducting qubit in the first connection region.

4. The system (600) according to claim 2 or 3, wherein
the control circuit (610) is further configured to: control a coupling strength between the first suspended superconducting qubit in each connection region and a first superconducting qubit coupled to the first suspended superconducting qubit to be less than the first preset value, and send a second pulse waveform, wherein the second pulse waveform is used to perform a quantum operation on the first central superconducting qubit or the first suspended superconducting qubit in one of the at least two connection regions (621, 702, 703, 704, 705, 1002, 1003) .

5. The system (600) according to claim 2, wherein the at least two connection regions (621, 702, 703, 704, 705, 1002, 1003) comprise a first connection region and a second connection region; and
the control circuit (610) is further configured to: control a coupling strength between a first suspended superconducting qubit in the first connection region and the first central superconducting qubit to be less than a first preset value, control a coupling strength between the first suspended superconducting qubit in the first connection region and a first superconducting qubit coupled to the first suspended superconducting qubit to be greater than a second preset value, and send a first pulse waveform, wherein the first pulse waveform is used to perform a two-bit operation on one first superconducting qubit in the first connection region and the first suspended superconducting qubit in the first connection region;
control the coupling strength between the first suspended superconducting qubit in the first connection region and the first central superconducting qubit to be greater than the second preset value, a coupling strength between a first suspended superconducting qubit in the second connection region and the first central superconducting qubit to be greater than the second preset value, and a coupling strength between the first suspended superconducting qubit in each connection region and a first superconducting qubit coupled to the first suspended superconducting qubit to be less than the first preset value, and send a second pulse waveform, wherein the second pulse waveform is used to perform a two-bit operation on the first suspended superconducting qubit in the first connection region and the first suspended superconducting qubit in the second connection region in the first central exchange region (622, 701, 1001); and
control a coupling strength between the first suspended superconducting qubit in the second connection region and a first superconducting qubit coupled to the first suspended superconducting qubit to be greater than the second preset value and the coupling strength between the first suspended superconducting qubit in the second connection region and the first central superconducting qubit to be less than the first preset value, and send a third pulse waveform, wherein the third pulse waveform is used to perform a two-bit operation on one first superconducting qubit in the second connection region and the first suspended superconducting qubit in the second connection region.

6. The system (600) according to claim 5, wherein
the control circuit (610) is further configured to: control the coupling strength between the first suspended superconducting qubit in the second connection region and the first central superconducting qubit to be greater than the second preset value, control the coupling strength between the first suspended superconducting qubit in each connection region and the first superconducting qubit coupled to the first suspended superconducting qubit to be less than the first preset value, and send a fourth pulse waveform, wherein the fourth pulse waveform is used to perform a reset operation on the first suspended superconducting qubit in the second connection region in the first central exchange region (622, 701, 1001); and
control the coupling strength between the first suspended superconducting qubit in the first connection region and the first superconducting qubit coupled to the first suspended superconducting bit in the first connection region to be greater than the second preset value, control the coupling strength between the first suspended superconducting qubit in the second connection region and the first central superconducting qubit to be less than the first preset value, and send a fifth pulse waveform, wherein the fifth pulse waveform is used to perform a reset operation on the first suspended superconducting qubit in the first connection region.

7. The system (600) according to claim **1,** wherein the first suspended superconducting qubit in each connection region is a same superconducting qubit.

8. The system (600) according to claim 7, wherein the at least two connection regions (621, 702, 703, 704, 705, 1002, 1003) comprise a first connection region; and
the control circuit (610) is further configured to: control a coupling strength between the first suspended superconducting qubit and a first superconducting qubit coupled to the first suspended superconducting qubit in a connection region other than the first connection region in the at least two connection regions (621, 702, 703, 704, 705, 1002, 1003) to be less than a first preset value, and send a first pulse waveform, wherein the first pulse waveform is used to perform a quantum operation on a superconducting qubit in the first connection region.

9. The system (600) according to claim 7, wherein
the control circuit (610) is further configured to: control a coupling strength between the first suspended superconducting qubit and a first superconducting qubit coupled to the first suspended superconducting qubit to be less than a first preset value, and send a first pulse waveform, wherein the first pulse waveform is used to perform a single-bit quantum operation on the first suspended superconducting qubit.

10. The system (600) according to any one of claims 1 to 9, wherein the first suspended superconducting qubit is coupled to one first superconducting qubit in a connection region in which the first suspended superconducting qubit is located.

11. The system (600) according to any one of claims 1 to 10, wherein there are at least two first central exchange regions (622, 701, 1001);
the superconducting quantum chip (620) further comprises a second central exchange region, the second central exchange region comprises at least two second suspended superconducting qubits and one second central superconducting qubit, the at least two second suspended superconducting qubits are in a one-to-one correspondence with the at least two first central exchange regions (622, 701, 1001), the second central superconducting qubit is coupled to each second suspended superconducting qubit, and each second suspended superconducting qubit is coupled to at least one superconducting qubit in a first central exchange region (622, 701, 1001) corresponding to each second suspended superconducting qubit; and
the control circuit (610) is further configured to control a coupling strength between the second central superconducting qubit and each second suspended superconducting qubit and a coupling strength between each second suspended superconducting qubit and the at least one superconducting qubit in the first central exchange region (622, 701, 1001) corresponding to the second suspended superconducting qubit.

12. The system (600) according to any one of claims 1 to **11,** wherein there are at least two first central exchange regions (622, 701, 1001);
the superconducting quantum chip (620) further comprises a third central exchange region, wherein the third central exchange region comprises one third central superconducting qubit, and the third central superconducting qubit is coupled to at least one superconducting qubit in each first central exchange region (622, 701, 1001); and
the control circuit (610) is further configured to control a coupling strength between the third central superconducting qubit and the at least one superconducting qubit in each first central exchange region.

13. A quantum bit manipulation method, applied to a superconducting quantum computing system (600), wherein the superconducting quantum computing system (600) comprises a control circuit (610) and a superconducting quantum chip (620);
the superconducting quantum chip (620) comprises at least two connection regions (621, 702, 703, 704, 705, 1002, 1003) and a first central exchange region (622, 701, 1001), each connection region of the at least two connection regions (621, 702, 703, 704, 705, 1002, 1003) comprises a first suspended superconducting qubit and at least one first superconducting qubit,;
the first central exchange region (622, 701, 1001) comprises the first suspended superconducting qubit in each connection region, and is used to transfer a quantum operation between a superconducting qubit in a first connection region and a superconducting qubit in a second connection region; and
the method comprises:
sending (1820), by the control circuit, a pulse waveform to the superconducting quantum chip (620), wherein the pulse waveform is used to perform a quantum operation on a superconducting qubit in a first subspace;
the method **characterised in that**:
the first suspended superconducting qubit is coupled to the at least one first superconducting qubit; and
the method further comprises controlling (1810), by the control circuit (610), a coupling strength between the first suspended superconducting qubit in each connection region and the at least one first superconducting qubit, to obtain the first subspace, wherein the first subspace is the connection region or the first central exchange region (622, 701, 1001).

14. The method according to claim 13, wherein the first central exchange region (622, 701, 1001) further comprises one first central superconducting qubit, and the first central superconducting qubit is coupled to the first suspended superconducting qubit in each connection region.

15. The method according to claim 14, wherein the controlling (1810), by the control circuit (610), a coupling strength between the first suspended superconducting qubit in each connection region and the at least one first superconducting qubit, to obtain a first subspace comprises:
controlling, by the control circuit (610), a coupling strength between a first suspended superconducting qubit in a first connection region and the first central superconducting qubit to be less than a first preset value, to obtain the first subspace, wherein the first subspace is the first connection region; and
the sending (1820), by the control circuit (610), a pulse waveform to the superconducting quantum chip (620), wherein the pulse waveform is used to perform a quantum operation on a superconducting qubit in the first subspace comprises:
sending, by the control circuit (610), a first pulse waveform to the superconducting quantum chip (620), wherein the first pulse waveform is used to perform a quantum operation on a superconducting qubit in the first connection region.

## Patentansprüche

1. Supraleitendes Quantenrechensystem (600), umfassend eine Steuerschaltung (610) und einen supraleitenden Quantenchip (620), wobei der supraleitende Quantenchip (620) mindestens zwei Verbindungsbereiche (621, 702, 703, 704, 705, 1002, 1003) und einen ersten zentralen Austauschbereich (622, 701, 1001) umfasst;
jeder Verbindungsbereich der mindestens zwei Verbindungsbereiche (621, 702, 703, 704, 705, 1002, 1003) ein erstes suspendiertes supraleitendes Qubit und mindestens ein erstes supraleitendes Qubit umfasst und das erste suspendierte supraleitende Qubit an das mindestens eine erste supraleitende Qubit gekoppelt ist; und
der erste zentrale Austauschbereich (622, 701, 1001) das erste suspendierte supraleitende Qubit in jedem Verbindungsbereich umfasst und dazu verwendet wird, einen Quantenvorgang zwischen einem supraleitenden Qubit in einem ersten Verbindungsbereich und einem supraleitenden Qubit in einem zweiten Verbindungsbereich zu übertragen;
das supraleitende Quantenrechensystem (600) **dadurch gekennzeichnet ist, dass** die Steuerschaltung (610) dazu konfiguriert ist, eine Kopplungsstärke zwischen dem ersten suspendierten supraleitenden Qubit in jedem Verbindungsbereich und dem mindestens einen ersten supraleitenden Qubit zu steuern.

2. System (600) nach Anspruch 1, wobei der erste zentrale Austauschbereich (622, 701, 1001) ferner ein erstes zentrales supraleitendes Qubit umfasst und das erste zentrale supraleitende Qubit in jedem Verbindungsbereich an das erste suspendierte supraleitende Qubit gekoppelt ist; und
die Steuerschaltung (610) ferner dazu konfiguriert ist, eine Kopplungsstärke zwischen dem ersten zentralen supraleitenden Qubit und dem ersten suspendierten supraleitenden Qubit zu steuern.

3. System (600) nach Anspruch 2, wobei die mindestens zwei Verbindungsbereiche (621, 702, 703, 704, 705, 1002, 1003) einen ersten Verbindungsbereich umfassen; und
die Steuerschaltung (610) ferner zu Folgendem konfiguriert ist:
Steuern einer Kopplungsstärke zwischen einem ersten suspendierten supraleitenden Qubit in dem ersten Verbindungsbereich und dem ersten zentralen supraleitenden Qubit, um weniger als ein erster voreingestellter Wert zu sein, und Senden einer ersten Impulswellenform, wobei die erste Impulswellenform dazu verwendet wird, einen Quantenvorgang an einem supraleitenden Qubit in dem ersten Verbindungsbereich durchzuführen.

4. System (600) nach Anspruch 2 oder 3, wobei
die Steuerschaltung (610) ferner zu Folgendem konfiguriert ist:
Steuern einer Kopplungsstärke zwischen dem ersten suspendierten supraleitenden Qubit in jedem Verbindungsbereich und einem ersten supraleitenden Qubit, das an das erste suspendierte supraleitende Qubit gekoppelt ist, um weniger als der erste voreingestellte Wert zu sein, und Senden einer zweiten Impulswellenform, wobei die zweite Impulswellenform dazu verwendet wird, einen Quantenvorgang an dem ersten zentralen supraleitenden Qubit oder dem ersten suspendierten supraleitenden Qubit in einem der mindestens zwei Verbindungsbereiche (621, 702, 703, 704, 705, 1002, 1003) durchzuführen.

5. System (600) nach Anspruch 2, wobei die mindestens zwei Verbindungsbereiche (621, 702, 703, 704, 705, 1002, 1003) einen ersten Verbindungsbereich und einen zweiten Verbindungsbereich umfassen; und
die Steuerschaltung (610) ferner zu Folgendem konfiguriert ist:
Steuern einer Kopplungsstärke zwischen einem ersten suspendierten supraleitenden Qubit in dem ersten Verbindungsbereich und dem ersten zentralen supraleitenden Qubit, um weniger als ein erster voreingestellter Wert zu sein, Steuern einer Kopplungsstärke zwischen dem ersten suspendierten supraleitenden Qubit in dem ersten Verbindungsbereich und einem ersten supraleitenden Qubit, das an das erste suspendierte supraleitende Qubit gekoppelt ist, um größer als ein zweiter voreingestellter Wert zu sein, und Senden einer ersten Impulswellenform, wobei die erste Impulswellenform dazu verwendet wird, einen Zwei-Bit-Vorgang an einem ersten supraleitenden Qubit in dem ersten Verbindungsbereich und dem ersten suspendierten supraleitenden Qubit in dem ersten Verbindungsbereich durchzuführen;
Steuern der Kopplungsstärke zwischen dem ersten suspendierten supraleitenden Qubit in dem ersten Verbindungsbereich und dem ersten zentralen supraleitenden Qubit, um größer als der zweite voreingestellte Wert zu sein, einer Kopplungsstärke zwischen einem ersten suspendierten supraleitenden Qubit in dem zweiten Verbindungsbereich und dem ersten zentralen supraleitenden Qubit, um größer als der zweite voreingestellte Wert zu sein, und einer Kopplungsstärke zwischen dem ersten suspendierten supraleitenden Qubit in jedem Verbindungsbereich und einem ersten supraleitenden Qubit, das an das erste suspendierte supraleitende Qubit gekoppelt ist, um weniger als der erste voreingestellte Wert zu sein, und Senden einer zweiten Impulswellenform, wobei die zweite Impulswellenform dazu verwendet wird, einen Zwei-Bit-Vorgang an dem ersten suspendierten supraleitenden Qubit in dem ersten Verbindungsbereich und dem ersten suspendierten supraleitenden Qubit in dem zweiten Verbindungsbereich in dem ersten zentralen Austauschbereich (622, 701, 1001) durchzuführen; und
Steuern einer Kopplungsstärke zwischen dem ersten suspendierten supraleitenden Qubit in dem zweiten Verbindungsbereich und einem ersten supraleitenden Qubit, das an das erste suspendierte supraleitende Qubit gekoppelt ist, um größer als der zweite voreingestellte Wert zu sein, und der Kopplungsstärke zwischen dem ersten suspendierten supraleitenden Qubit in dem zweiten Verbindungsbereich und dem ersten zentralen supraleitenden Qubit, um weniger als der erste voreingestellte Wert zu sein, und Senden einer dritten Impulswellenform, wobei die dritte Impulswellenform dazu verwendet wird, einen Zwei-Bit-Vorgang an einem ersten supraleitenden Qubit in dem zweiten Verbindungsbereich und dem ersten suspendierten supraleitenden Qubit in dem zweiten Verbindungsbereich durchzuführen.

6. System (600) nach Anspruch 5, wobei
die Steuerschaltung (610) ferner zu Folgendem konfiguriert ist:
Steuern der Kopplungsstärke zwischen dem ersten suspendierten supraleitenden Qubit in dem zweiten Verbindungsbereich und dem ersten zentralen supraleitenden Qubit, um größer als der zweite voreingestellte Wert zu sein, Steuern der Kopplungsstärke zwischen dem ersten suspendierten supraleitenden Qubit in jedem Verbindungsbereich und dem ersten supraleitenden Qubit, das an das erste suspendierte supraleitende Qubit gekoppelt ist, um weniger als der erste voreingestellte Wert zu sein, und Senden einer vierten Impulswellenform, wobei die vierte Impulswellenform dazu verwendet wird, einen Rücksetzvorgang an dem ersten suspendierten supraleitenden Qubit in dem zweiten Verbindungsbereich in dem ersten zentralen Austauschbereich (622, 701, 1001) durchzuführen; und
Steuern der Kopplungsstärke zwischen dem ersten suspendierten supraleitenden Qubit in dem ersten Verbindungsbereich und dem ersten supraleitenden Qubit, das an das erste suspendierte supraleitende Bit in dem ersten Verbindungsbereich gekoppelt ist, um größer als der zweite voreingestellte Wert zu sein, Steuern der Kopplungsstärke zwischen dem ersten suspendierten supraleitenden Qubit in dem zweiten Verbindungsbereich und dem ersten zentralen supraleitenden Qubit, um weniger als der erste voreingestellte Wert zu sein, und Senden einer fünften Impulswellenform, wobei die fünfte Impulswellenform dazu verwendet wird, einen Rücksetzvorgang an dem ersten suspendierten supraleitenden Qubit in dem ersten Verbindungsbereich durchzuführen.

7. System (600) nach Anspruch 1, wobei das erste suspendierte supraleitende Qubit in jedem Verbindungsbereich ein gleiches supraleitendes Qubit ist.

8. System (600) nach Anspruch 7, wobei die mindestens zwei Verbindungsbereiche (621, 702, 703, 704, 705, 1002, 1003) einen ersten Verbindungsbereich umfassen; und
die Steuerschaltung (610) ferner zu Folgendem konfiguriert ist:
Steuern einer Kopplungsstärke zwischen dem ersten suspendierten supraleitenden Qubit und einem ersten supraleitenden Qubit, das an das erste suspendierte supraleitende Qubit in einem anderen Verbindungsbereich als dem ersten Verbindungsbereich in den mindestens zwei Verbindungsbereichen (621, 702, 703, 704, 705, 1002, 1003) gekoppelt ist, um weniger als ein erster voreingestellter Wert zu sein, und Senden einer ersten Impulswellenform, wobei die erste Impulswellenform dazu verwendet wird, einen Quantenvorgang an einem supraleitenden Qubit in dem ersten Verbindungsbereich durchzuführen.

9. System (600) nach Anspruch 7, wobei
die Steuerschaltung (610) ferner zu Folgendem konfiguriert ist:
Steuern einer Kopplungsstärke zwischen dem ersten suspendierten supraleitenden Qubit und einem ersten supraleitenden Qubit, das an das erste suspendierte supraleitende Qubit gekoppelt ist, um weniger als ein erster voreingestellter Wert zu sein, und Senden einer ersten Impulswellenform, wobei die erste Impulswellenform dazu verwendet wird, einen Einzelbit-Quantenvorgang an dem ersten suspendierten supraleitenden Qubit durchzuführen.

10. System (600) nach einem der Ansprüche 1 bis 9, wobei das erste suspendierte supraleitende Qubit an ein erstes supraleitendes Qubit in einem Verbindungsbereich gekoppelt ist, in dem sich das erste suspendierte supraleitende Qubit befindet.

11. System (600) nach einem der Ansprüche 1 bis 10, wobei es mindestens zwei erste zentrale Austauschbereiche (622, 701, 1001) gibt;
der supraleitende Quantenchip (620) ferner einen zweiten zentralen Austauschbereich umfasst, der zweite zentrale Austauschbereich mindestens zwei zweite suspendierte supraleitende Qubits und ein zweites zentrales supraleitendes Qubit umfasst, die mindestens zwei zweiten suspendierten supraleitenden Qubits in einer Eins-zu-Eins-Entsprechung mit den mindestens zwei ersten zentralen Austauschbereichen (622, 701, 1001) stehen, das zweite zentrale supraleitende Qubit an jedes zweite suspendierte supraleitende Qubit gekoppelt ist und jedes zweite suspendierte supraleitende Qubit an mindestens ein supraleitendes Qubit in einem ersten zentralen Austauschbereich (622, 701, 1001) gekoppelt ist, der jedem zweiten suspendierten supraleitenden Qubit entspricht; und
die Steuerschaltung (610) ferner dazu konfiguriert ist, eine Kopplungsstärke zwischen dem zweiten zentralen supraleitenden Qubit und jedem zweiten suspendierten supraleitenden Qubit und eine Kopplungsstärke zwischen jedem zweiten suspendierten supraleitenden Qubit und dem mindestens einen supraleitenden Qubit in dem ersten zentralen Austauschbereich (622, 701, 1001), der dem zweiten suspendierten supraleitenden Qubit entspricht, zu steuern.

12. System (600) nach einem der Ansprüche 1 bis 11, wobei es mindestens zwei erste zentrale Austauschbereiche (622, 701, 1001) gibt;
der supraleitende Quantenchip (620) ferner einen dritten zentralen Austauschbereich umfasst, wobei der dritte zentrale Austauschbereich ein drittes zentrales supraleitendes Qubit umfasst und das dritte zentrale supraleitende Qubit an mindestens ein supraleitendes Qubit in jedem ersten zentralen Austauschbereich (622, 701, 1001) gekoppelt ist; und
die Steuerschaltung (610) ferner dazu konfiguriert ist, eine Kopplungsstärke zwischen dem dritten zentralen supraleitenden Qubit und dem mindestens einen supraleitenden Qubit in jedem ersten zentralen Austauschbereich zu steuern.

13. Quantenbitmanipulationsverfahren, das auf ein supraleitendes Quantenrechensystem (600) angewandt wird, wobei das supraleitende Quantenrechensystem (600) eine Steuerschaltung (610) und einen supraleitenden Quantenchip (620) umfasst;
der supraleitende Quantenchip (620) mindestens zwei Verbindungsbereiche (621, 702, 703, 704, 705, 1002, 1003) und einen ersten zentralen Austauschbereich (622, 701, 1001) umfasst, jeder Verbindungsbereich der mindestens zwei Verbindungsbereiche (621, 702, 703, 704, 705, 1002, 1003) ein erstes suspendiertes supraleitendes Qubit und mindestens ein erstes supraleitendes Qubit umfasst;
der erste zentrale Austauschbereich (622, 701, 1001) das erste suspendierte supraleitende Qubit in jedem Verbindungsbereich umfasst und dazu verwendet wird, einen Quantenvorgang zwischen einem supraleitenden Qubit in einem ersten Verbindungsbereich und einem supraleitenden Qubit in einem zweiten Verbindungsbereich zu übertragen; und
das Verfahren Folgendes umfasst:
Senden (1820), durch die Steuerschaltung, einer Impulswellenform an den supraleitenden Quantenchip (620), wobei die Impulswellenform dazu verwendet wird, einen Quantenvorgang an einem supraleitenden Qubit in einem ersten Unterraum durchzuführen;
das Verfahren **dadurch gekennzeichnet ist, dass**:
das erste suspendierte supraleitende Qubit an das mindestens eine erste supraleitende Qubit gekoppelt ist; und
das Verfahren ferner Steuern (1810), durch die Steuerschaltung (610), einer Kopplungsstärke zwischen dem ersten suspendierten supraleitenden Qubit in jedem Verbindungsbereich und dem mindestens einen ersten supraleitenden Qubit umfasst, um den ersten Unterraum zu erlangen, wobei der erste Unterraum der Verbindungsbereich oder der erste zentrale Austauschbereich (622, 701, 1001) ist.

14. Verfahren nach Anspruch 13, wobei der erste zentrale Austauschbereich (622, 701, 1001) ferner ein erstes zentrales supraleitendes Qubit umfasst und das erste zentrale supraleitende Qubit in jedem Verbindungsbereich an das erste suspendierte supraleitende Qubit gekoppelt ist.

15. Verfahren nach Anspruch 14, wobei das Steuern (1810), durch die Steuerschaltung (610), einer Kopplungsstärke zwischen dem ersten suspendierten supraleitenden Qubit in jedem Verbindungsbereich und dem mindestens einen ersten supraleitenden Qubit, um einen ersten Unterraum zu erlangen, Folgendes umfasst:
Steuern, durch die Steuerschaltung (610), einer Kopplungsstärke zwischen einem ersten suspendierten supraleitenden Qubit in einem ersten Verbindungsbereich und dem ersten zentralen supraleitenden Qubit, um weniger als ein erster voreingestellter Wert zu sein, um den ersten Unterraum zu erlangen, wobei der erste Unterraum der erste Verbindungsbereich ist; und
das Senden (1820), durch die Steuerschaltung (610), einer Impulswellenform an den supraleitenden Quantenchip (620), wobei die Impulswellenform dazu verwendet wird, einen Quantenvorgang an einem supraleitenden Qubit in dem ersten Unterraum durchzuführen, Folgendes umfasst:
Senden, durch die Steuerschaltung (610), einer ersten Impulswellenform an den supraleitenden Quantenchip (620), wobei die erste Impulswellenform dazu verwendet wird, einen Quantenvorgang an einem supraleitenden Qubit in dem ersten Verbindungsbereich durchzuführen.

## Revendications

1. Système de calcul quantique supraconducteur (600), comprenant un circuit de commande (610) et une puce quantique supraconductrice (620), dans lequel la puce quantique supraconductrice (620) comprend au moins deux régions de connexion (621, 702, 703, 704, 705, 1002, 1003) et une première région d'échange centrale (622, 701, 1001) ;
chaque région de connexion des au moins deux régions de connexion (621, 702, 703, 704, 705, 1002, 1003) comprend un premier qubit supraconducteur suspendu et au moins un premier qubit supraconducteur, et le premier qubit supraconducteur suspendu est couplé à l'au moins un premier qubit supraconducteur ; et
la première région d'échange centrale (622, 701, 1001) comprend le premier qubit supraconducteur suspendu dans chaque région de connexion, et est utilisée pour transférer une opération quantique entre un qubit supraconducteur dans une première région de connexion et un qubit supraconducteur dans une seconde région de connexion ;
le système de calcul quantique supraconducteur (600) **caractérisé en ce que** le circuit de commande (610) est configuré pour commander une force de couplage entre le premier qubit supraconducteur suspendu dans chaque région de connexion et l'au moins un premier qubit supraconducteur.

2. Système (600) selon la revendication 1, dans lequel la première région d'échange centrale (622, 701, 1001) comprend en outre un premier qubit supraconducteur central, et le premier qubit supraconducteur central est couplé au premier qubit supraconducteur suspendu dans chaque région de connexion ; et
le circuit de commande (610) est en outre configuré pour commander une force de couplage entre le premier qubit supraconducteur central et le premier qubit supraconducteur suspendu.

3. Système (600) selon la revendication 2, dans lequel les au moins deux régions de connexion (621, 702, 703, 704, 705, 1002, 1003) comprennent une première région de connexion ; et
le circuit de commande (610) est en outre configuré pour :
commander une force de couplage entre un premier qubit supraconducteur suspendu dans la première région de connexion et le premier qubit supraconducteur central afin qu'elle soit inférieure à une première valeur prédéfinie, et envoyer une première forme d'onde d'impulsion, dans lequel la première forme d'onde d'impulsion est utilisée pour réaliser une opération quantique sur un qubit supraconducteur dans la première région de connexion.

4. Système (600) selon la revendication 2 ou 3, dans lequel
le circuit de commande (610) est en outre configuré pour :
commander une force de couplage entre le premier qubit supraconducteur suspendu dans chaque région de connexion et un premier qubit supraconducteur couplé au premier qubit supraconducteur suspendu afin qu'elle soit inférieure à la première valeur prédéfinie, et envoyer une deuxième forme d'onde d'impulsion, dans lequel la deuxième forme d'onde d'impulsion est utilisée pour réaliser une opération quantique sur le premier qubit supraconducteur central ou le premier qubit supraconducteur suspendu dans l'une des au moins deux régions de connexion (621, 702, 703, 704, 705, 1002, 1003).

5. Système (600) selon la revendication 2, dans lequel les au moins deux régions de connexion (621, 702, 703, 704, 705, 1002, 1003) comprennent une première région de connexion et une seconde région de connexion ; et
le circuit de commande (610) est en outre configuré pour :
commander une force de couplage entre un premier qubit supraconducteur suspendu dans la première région de connexion et le premier qubit supraconducteur central afin qu'elle soit inférieure à une première valeur prédéfinie, commander une force de couplage entre le premier qubit supraconducteur suspendu dans la première région de connexion et un premier qubit supraconducteur couplé au premier qubit supraconducteur suspendu afin qu'elle soit supérieure à une seconde valeur prédéfinie, et envoyer une première forme d'onde d'impulsion, dans lequel la première forme d'onde d'impulsion est utilisée pour réaliser une opération à deux bits sur un premier qubit supraconducteur dans la première région de connexion et le premier qubit supraconducteur suspendu dans la première région de connexion ;
commander la force de couplage entre le premier qubit supraconducteur suspendu dans la première région de connexion et le premier qubit supraconducteur central afin qu'elle soit supérieure à la seconde valeur prédéfinie, une force de couplage entre un premier qubit supraconducteur suspendu dans la seconde région de connexion et le premier qubit supraconducteur central afin qu'elle soit supérieure à la seconde valeur prédéfinie, et une force de couplage entre le premier qubit supraconducteur suspendu dans chaque région de connexion et un premier qubit supraconducteur couplé au premier qubit supraconducteur suspendu afin qu'elle soit inférieure à la première valeur prédéfinie, et envoyer une deuxième forme d'onde d'impulsion, dans lequel la deuxième forme d'onde d'impulsion est utilisée pour réaliser une opération à deux bits sur le premier qubit supraconducteur suspendu dans la première région de connexion et le premier qubit supraconducteur suspendu dans la seconde région de connexion dans la première région d'échange centrale (622, 701, 1001) ; et
commander une force de couplage entre le premier qubit supraconducteur suspendu dans la seconde région de connexion et un premier qubit supraconducteur couplé au premier qubit supraconducteur suspendu afin qu'elle soit supérieure à la seconde valeur prédéfinie, et la force de couplage entre le premier qubit supraconducteur suspendu dans la seconde région de connexion et le premier qubit supraconducteur central afin qu'elle soit inférieure à la première valeur prédéfinie, et envoyer une troisième forme d'onde d'impulsion, dans lequel la troisième forme d'onde d'impulsion est utilisée pour réaliser une opération à deux bits sur un premier qubit supraconducteur dans la seconde région de connexion et le premier qubit supraconducteur suspendu dans la seconde région de connexion.

6. Système (600) selon la revendication 5, dans lequel
le circuit de commande (610) est en outre configuré pour :
commander la force de couplage entre le premier qubit supraconducteur suspendu dans la seconde région de connexion et le premier qubit supraconducteur central afin qu'elle soit supérieure à une seconde valeur prédéfinie, commander la force de couplage entre le premier qubit supraconducteur suspendu dans chaque région de connexion et le premier qubit supraconducteur couplé au premier qubit supraconducteur suspendu afin qu'elle soit inférieure à la première valeur prédéfinie, et envoyer une quatrième forme d'onde d'impulsion, dans lequel la quatrième forme d'onde d'impulsion est utilisée pour réaliser une opération de réinitialisation sur le premier qubit supraconducteur suspendu dans la seconde région de connexion dans la première région d'échange centrale (622, 701, 1001) ; et
commander la force de couplage entre le premier qubit supraconducteur suspendu dans la première région de connexion et le premier qubit supraconducteur couplé au premier bit supraconducteur suspendu dans la première région de connexion afin qu'elle soit supérieure à la seconde valeur prédéfinie, commander la force de couplage entre le premier qubit supraconducteur suspendu dans la seconde région de connexion et le premier qubit supraconducteur central afin qu'elle soit inférieure à la première valeur prédéfinie, et envoyer une cinquième forme d'onde d'impulsion, dans lequel la cinquième forme d'onde d'impulsion est utilisée pour réaliser une opération de réinitialisation sur le premier qubit supraconducteur suspendu dans première région de connexion.

7. Système (600) selon la revendication 1, dans lequel le premier qubit supraconducteur suspendu dans chaque région de connexion est un même qubit supraconducteur.

8. Système (600) selon la revendication 7, dans lequel les au moins deux régions de connexion (621, 702, 703, 704, 705, 1002, 1003) comprennent une première région de connexion ; et
le circuit de commande (610) est en outre configuré pour :
commander une force de couplage entre le premier qubit supraconducteur suspendu et un premier qubit supraconducteur couplé au premier qubit supraconducteur suspendu dans une région de connexion autre que la première région de connexion dans les au moins deux régions de connexion (621, 702, 703, 704, 705, 1002, 1003) afin qu'elle soit inférieure à une première valeur prédéfinie, et envoyer une première forme d'onde d'impulsion, dans lequel la première forme d'onde d'impulsion est utilisée pour réaliser une opération quantique sur un qubit supraconducteur dans la première région de connexion.

9. Système (600) selon la revendication 7, dans lequel
le circuit de commande (610) est en outre configuré pour :
commander une force de couplage entre le premier qubit supraconducteur suspendu et un premier qubit supraconducteur couplé au premier qubit supraconducteur suspendu afin qu'elle soit inférieure à une première valeur prédéfinie, et envoyer une première forme d'onde d'impulsion, dans lequel la première forme d'onde d'impulsion est utilisée pour réaliser une opération quantique à un seul bit sur le premier qubit supraconducteur suspendu.

10. Système (600) selon l'une quelconque des revendications 1 à 9, dans lequel le premier qubit supraconducteur suspendu est couplé à un premier qubit supraconducteur dans une région de connexion dans laquelle se trouve le premier qubit supraconducteur suspendu.

11. Système (600) selon l'une quelconque des revendications 1 à 10, dans lequel il existe au moins deux premières régions d'échange centrales (622, 701, 1001) ;
la puce quantique supraconductrice (620) comprend en outre une deuxième région d'échange centrale, la deuxième région d'échange centrale comprend au moins deux seconds qubits supraconducteurs suspendus et un deuxième qubit supraconducteur central, les au moins deux seconds qubits supraconducteurs suspendus sont en correspondance biunivoque avec les au moins deux premières régions d'échange centrales (622, 701, 1001), le deuxième qubit supraconducteur central est couplé à chaque second qubit supraconducteur suspendu, et chaque second qubit supraconducteur suspendu est couplé à au moins un qubit supraconducteur dans une première région d'échange centrale (622, 701, 1001) correspondant à chaque second qubit supraconducteur suspendu ; et
le circuit de commande (610) est en outre configuré pour commander une force de couplage entre le deuxième qubit supraconducteur central et chaque second qubit supraconducteur suspendu et une force de couplage entre chaque second qubit supraconducteur suspendu et l'au moins un qubit supraconducteur dans la première région d'échange centrale (622, 701, 1001) correspondant au second qubit supraconducteur suspendu.

12. Système (600) selon l'une quelconque des revendications 1 à 11, dans lequel il existe au moins deux premières régions d'échange centrales (622, 701, 1001) ;
la puce quantique supraconductrice (620) comprend en outre une troisième région d'échange centrale, dans lequel la troisième région d'échange centrale comprend un troisième qubit supraconducteur central, et le troisième qubit supraconducteur central est couplé à au moins un qubit supraconducteur dans chacune des premières régions d'échange centrales (622, 701, 1001) ; et
le circuit de commande (610) est en outre configuré pour commander une force de couplage entre le troisième qubit supraconducteur central et l'au moins un qubit supraconducteur dans chaque première région d'échange centrale.

13. Procédé de manipulation de bit quantique, appliqué à un système de calcul quantique supraconducteur (600), dans lequel le système de calcul quantique supraconducteur (600) comprend un circuit de commande (610) et une puce quantique supraconductrice (620) ;
la puce quantique supraconductrice (620) comprend au moins deux régions de connexion (621, 702, 703, 704, 705, 1002, 1003) et une première région d'échange centrale (622, 701, 1001), chaque région de connexion des au moins deux régions de connexion (621, 702, 703, 704, 705, 1002, 1003) comprend un premier qubit supraconducteur suspendu et au moins un premier qubit supraconducteur ;
la première région d'échange centrale (622, 701, 1001) comprend le premier qubit supraconducteur suspendu dans chaque région de connexion, et est utilisée pour transférer une opération quantique entre un qubit supraconducteur dans une première région de connexion et un qubit supraconducteur dans une seconde région de connexion ; et
le procédé comprend :
l'envoi (1820), par le circuit de commande, d'une forme d'onde d'impulsion à la puce quantique supraconductrice (620), dans lequel la forme d'onde d'impulsion est utilisée pour réaliser une opération quantique sur un qubit supraconducteur dans un premier sous-espace ;
le procédé étant **caractérisé en ce que** :
le premier qubit supraconducteur suspendu est couplé à l'au moins un premier qubit supraconducteur ; et
le procédé comprend en outre la commande (1810), par le circuit de commande (610), d'une force de couplage entre le premier qubit supraconducteur suspendu dans chaque région de connexion et l'au moins un premier qubit supraconducteur, afin d'obtenir le premier sous-espace, dans lequel le premier sous-espace est la région de connexion ou la première région d'échange centrale (622, 701, 1001).

14. Procédé selon la revendication 13, dans lequel la première région d'échange centrale (622, 701, 1001) comprend en outre un premier qubit supraconducteur central, et le premier qubit supraconducteur central est couplé au premier qubit supraconducteur suspendu dans chaque région de connexion.

15. Procédé selon la revendication 14, dans lequel la commande (1810), par le circuit de commande (610), d'une force de couplage entre le premier qubit supraconducteur suspendu dans chaque région de connexion et l'au moins un premier qubit supraconducteur, afin d'obtenir un premier sous-espace, comprend :
la commande, par le circuit de commande (610), d'une force de couplage entre un premier qubit supraconducteur suspendu dans une première région de connexion et le premier qubit supraconducteur central afin qu'elle soit inférieure à une première valeur prédéfinie, afin d'obtenir le premier sous-espace, dans lequel le premier sous-espace est la première région de connexion ; et
l'envoi (1820), par le circuit de commande (610), d'une forme d'onde d'impulsion à la puce quantique supraconductrice (620), dans lequel la forme d'onde d'impulsion est utilisée pour réaliser une opération quantique sur un qubit supraconducteur dans le premier sous-espace, comprend :
l'envoi, par le circuit de commande (610), d'une première forme d'onde d'impulsion à la puce quantique supraconductrice (620), dans lequel la première forme d'onde d'impulsion est utilisée pour réaliser une opération quantique sur un qubit supraconducteur dans la première région de connexion.
